(19) Europäisches Patentamt
European Patent Office
Office européen des brevets

(11) **EP 1 783 681 A1**

## (12) EUROPEAN PATENT APPLICATION
published in accordance with Art. 158(3) EPC

(43) Date of publication:
**09.05.2007 Bulletin 2007/19**

(21) Application number: **06767630.4**

(22) Date of filing: **29.06.2006**

(51) Int Cl.:
**G06T 1/00** *(2006.01)* **G06F 17/30** *(2006.01)*
**G06T 7/00** *(2006.01)* **H04N 5/225** *(2006.01)*
**H04N 5/76** *(2006.01)* **H04N 5/91** *(2006.01)*

(86) International application number:
**PCT/JP2006/013013**

(87) International publication number:
**WO 2007/004519 (11.01.2007 Gazette 2007/02)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.06.2005 JP 2005192811**

(71) Applicant: **Olympus Corporation**
**Tokyo 151-0072 (JP)**

(72) Inventors:
• **SHIBASAKI, Takao**
**c/o Olympus Intellectual Prop. Services CO.,Ltd.**
**Tokyo 192-8512 (JP)**

• **FUKUYAMA, Naohiro**
**c/o Olympus Intellectual Prop. Services CO.,Ltd.**
**Tokyo 192-8512 (JP)**
• **AKATSUKA, Yuichiro**
**c/o Olympus Intellectual Prop. Services CO.,Ltd.**
**Tokyo 192-8512 (JP)**
• **FURUHASHI, Yukihito**
**c/o Olympus Intellectual Prop. Services CO.,Ltd.**
**Tokyo 192-8512 (JP)**

(74) Representative: **von Hellfeld, Axel**
**Wuesthoff & Wuesthoff**
**Patent- und Rechtsanwälte**
**Schweigerstrasse 2**
**81541 München (DE)**

## (54) RETRIEVAL SYSTEM AND RETRIEVAL METHOD

(57) When an image of a subject including a retrieval-source printout (1) is acquired by a digital camera (10), the digital camera (10) extracts a region corresponding to the retrieval-source printout (1) from the acquired image data, extracts a feature value of the extracted region, accesses a storage (20) in which a database capable of retrieval of image data on the basis of the feature value is constructed, and retrieves original image data of the retrieval-source printout (1) from the database on the basis of the extracted feature value.

FIG. 2

EP 1 783 681 A1

**Description**

Technical Field

The present invention relates to a retrieval system and a retrieval method for retrieving image data from a database.

Background Art

In recent years, it has become widely popular to printout and enjoy image data which is acquired by digital cameras, like images acquired by silver-chloride film cameras.

In a case where image data, which has already been printed out, is to be printed once again, such reprinting is very time-consuming since the user has to retrieve the image data from an image storage medium by referring to relevant information (e.g. file name, date of image acquisition) of the image data.

Jpn. Pat. Appln. KOKAI Publication No. 2001-88374, for instance, proposes a storage printer which stores printed-out image data and enables a keyword search or the like, with a view to easily retrieving once printed-out image data from an image data supply source.

Disclosure of Invention

In the storage printer disclosed in Jpn. Pat. Appln. KOKAI Publication No. 2001-88374, however, the retrieval is not executed on the basis of an image itself. In a case where a great amount of image data is stored in the memory area in the printer, many candidates of images for re-printout are displayed and a great deal of time is needed for the user's choice.

The present invention has been made in consideration of the above-described point, and the object of the invention is to provide a retrieval system and a retrieval method for enabling easy retrieval of original image data of a printout image.

According to an aspect of a retrieval system of the invention, there is provided a retrieval system characterized by comprising: region extraction means for extracting a region which corresponds to a printout image, from image data of a subject acquired by an image acquisition means, the subject including the printout image; feature value extraction means for extracting a feature value of the region extracted by the region extraction means; and retrieval means for accessing a database, which enables retrieval of image data on the basis of the feature value, and retrieving image data from the database on the basis of the feature value which is extracted by the feature value extraction means.

According to an aspect of a retrieval method of the invention, there is provided a retrieval method for retrieving image data on the basis of a printout image, characterized by comprising: extracting a region which corresponds to a printout image, from image data of a subject acquired by an image acquisition means, the subject including the printout image; extracting a feature value of the extracted region; and accessing a database, which enables retrieval of image data on the basis of the feature value, and retrieving image data from the database on the basis of the extracted feature value.

According to another aspect of a retrieval system of the invention, there is provided a retrieval system characterized by comprising: image acquisition means for acquiring an image of a subject; feature value extraction means for extracting a feature value of a region which is acquired by the image acquisition means; retrieval means for accessing an image database, which enables retrieval of image data on the basis of the feature value, and retrieving image data from the image database on the basis of the feature value which is extracted by the feature value extraction means; and display means for displaying a plurality of retrieval results of the retrieval means.

Brief Description of Drawings

FIG. 1 schematically shows the structure of a retrieval system according to a first embodiment of the present invention;
FIG. 2 is a block diagram of the retrieval system according to the first embodiment;
FIG. 3 is a flowchart illustrating the operation of the retrieval system according to the first embodiment;
FIG. 4 is a flowchart illustrating the details of a printout cutting-out process;
FIG. 5 is a flowchart illustrating the details of a matching process with DB;
FIG. 6 is a flowchart illustrating the details of another example of the matching process with DB;
FIG. 7 shows a display screen of a display unit of a digital camera in a case where only one image candidate is displayed;

FIG. 8 shows the display screen in a case where nine image candidates are displayed;

FIG. 9 is a flowchart illustrating a method of creating a feature value database;

FIG. 10 is a flowchart illustrating another example of the method of creating the feature value database;

FIG. 11 is a flowchart illustrating still another example of the method of creating the feature value database;

FIG. 12 is a flowchart illustrating still another example of the method of creating the feature value database;

FIG. 13 is a view for explaining an operational concept in a case of image acquisition of a station sign board as a sign board;

FIG. 14 shows an example in which a photograph is displayed on a map;

FIG. 15 shows another example in which a photograph is displayed on a map;

FIG. 16 shows an example in which many photographs are displayed on a map;

FIG. 17 shows another example in which many photographs are displayed on a map;

FIG. 18 is a block diagram of a retrieval system according to a second embodiment of the invention;

FIG. 19 is a flowchart illustrating the operation of the retrieval system according to the second embodiment;

FIG. 20 is a flowchart illustrating the details of a printout image acquiring process;

FIG. 21 is a flowchart illustrating a method of creating a feature value database;

FIG. 22 is a block diagram of a camera-equipped mobile phone, to which a retrieval system according to a third embodiment of the present invention is applied;

FIG. 23 is a flowchart illustrating the operation of a retrieval system according to a fourth embodiment of the present invention;

FIG. 24 is a view for explaining an outline template which is used in a retrieval system according to a fifth embodiment of the invention;

FIG. 25 is a view for explaining a detail template which is used in the retrieval system according to the fifth embodiment;

FIG. 26 is a view for explaining the positional relationship between original image data and the outline template and detail template;

FIG. 27 is a flowchart illustrating the operation of the retrieval system according to the fifth embodiment;

FIG. 28 is a view for explaining a detail template with attention paid to a central part of image data;

FIG. 29 is a view for explaining detail templates which are arranged in a distributed fashion within an image;

FIG. 30 is a view for explaining a detail template with a region of interest being set at a focal position at the time of acquiring original image data;

FIG. 31 is a view for explaining a composite template, with an outline template and a detail template being included in the same image;

FIG. 32 shows a 16 X 16 template, a 128 X 128 template, and a composite template in which these templates are combined;

FIG. 33 is a view for explaining a detail template which is created in the same region as an outline template;

FIG. 34 is a flowchart illustrating the operation of a retrieval system according to a sixth embodiment of the present invention;

FIG. 35 is a flowchart illustrating the details of a printout cutting-out process in a seventh embodiment of the invention;

FIG. 36 is a view for explaining an edge extraction filter which is used in the seventh embodiment;

FIG. 37 is a view for explaining Hough transform;

FIG. 38 shows an example of extraction of a straight line in a case where only one region of interest is present in an image acquisition view field;

FIG. 39 shows an example of extraction of a straight line in a case where there are a plurality of regions-of-interest;

FIG. 40 is a flowchart illustrating the details of a printout cutting-out process in an eighth embodiment of the present invention;

FIG. 41 is a view for explaining a guide frame in the eight embodiment, and an upper side region, a lower side region, a left side region and a right side region which are divided by the guide frame;

FIG. 42 is a flowchart illustrating the details of a printout cutting-out process in the eighth embodiment;

FIG. 43 is a view for explaining the relationship between acquired image data and image data of each straight-line extraction region;

FIG. 44 is a view for explaining the ranges of angles in which the sides in the respective straight-line extraction regions are present;

FIG. 45 is a flowchart illustrating the details of a process of extracting a straight line from each straight-line extraction region;

FIG. 46 shows an example of display of a digital camera at a time of image acquisition of a display device which displays image data; and

FIG. 47 shows an example of display at a time when a region of interest extraction process is completed.

Best Mode for Carrying Out the Invention

Best modes for carrying out the present invention will now be described with reference to the accompanying drawings.

[First Embodiment]

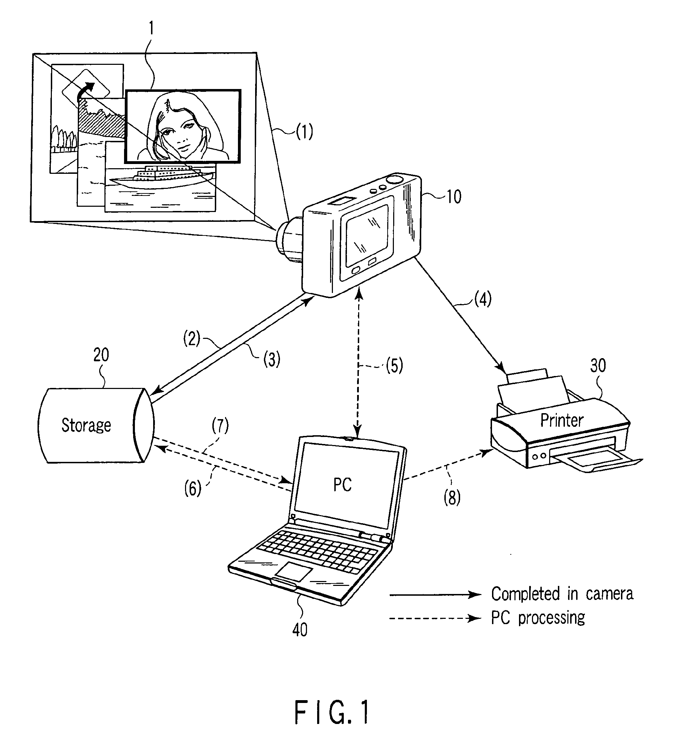

As shown in FIG. 1, the retrieval system according to a first embodiment of the present invention includes a digital camera 10, a storage 20, and a printer 30. The storage 20 stores multiple items of image data. The printer 30 prints image data stored in the storage 20.

For example, the storage 20 is a memory detachable from or built in the digital camera 10. The printer 30 prints out image data stored in the memory, i.e., the storage 20, in accordance with a printout instruction received from the digital camera 10. Alternately, the storage 20 is connected to the digital camera 10 through connection terminals, cable, or wireless/wired network, or alternately, can be a device mounting a memory detached from the digital camera 10 and capable of transferring image data. In this case, the printer 30 can be of the type that connected to or is integrally configured with the storage 20 and that executes printout operation in accordance with a printout instruction received from the digital camera 10.

The storage 20 further includes functionality of a database from which image data is retrievable in accordance with the feature value. Specifically, the storage 20 configures a feature value database (DB) containing feature value data (template) sets created from digital data of original images.

The retrieval system thus configured performs operation as follows.

(1) First, the digital camera 10 acquires an image of a photographic subject including a retrieval source printout 1 once printed out by the printer 30. Then, a region corresponding to the image of the retrieval source printout 1 is extracted from the acquired image data, and a feature value of the extracted region is extracted.

(2) Then, the digital camera 10 executes template matching process of the extracted feature value with the templates stored in the storage 20.

(3) As a consequence, the digital camera 10 reads image data corresponding to matched template from the storage 20 as original image data of the retrieval source printout 1.

(4) Thereby, the digital camera 10 is able to again print out the read original image data with the printer 30.

The retrieval source printout 1 can use not only a printout having been output in units of one page, but also an index print having been output to collectively include a plurality of demagnified images. This is because it is more advantageous in cost and usability to select necessary images from the index print and to copy them.

The retrieval source printout 1 can be a printout output from a printer (not shown) external of the system as long as it is an image of which original image data exists in the feature value data base.

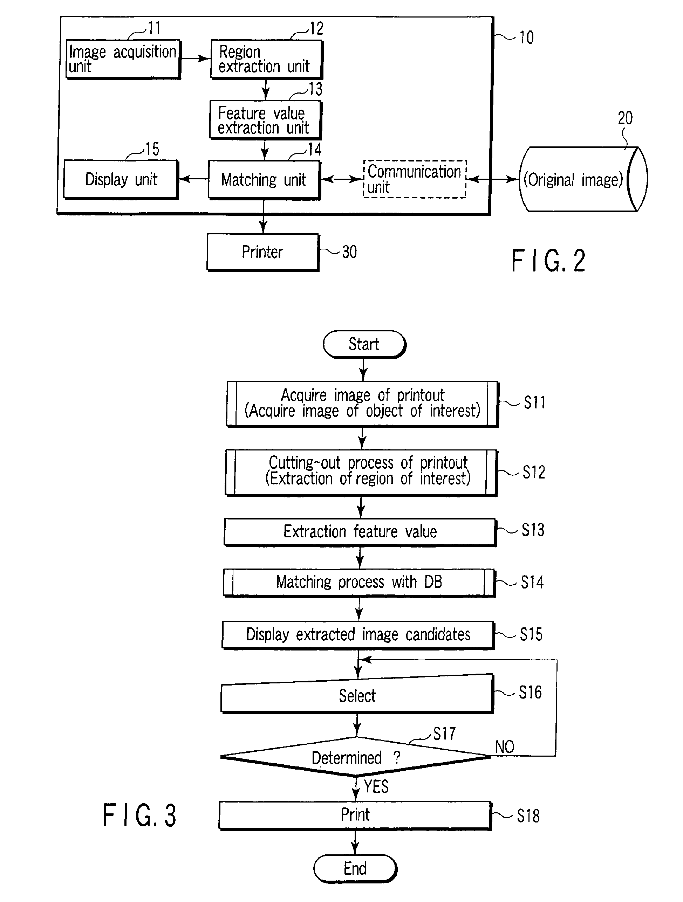

The retrieval system of the first embodiment will be described in more detail with reference to a block diagram of configuration shown in FIG. 2 and an operational flowchart shown in FIG. 3. The digital camera 10 has a retrieval mode for retrieving already-acquired image data in addition to the regular imaging mode. The operational flowchart of FIG. 3 shows the process in the retrieval mode being set.

Specifically, after setting the retrieval mode, the user acquires an image of a retrieval source printout 1, re-printout of which is desired, by an image acquisition unit 11 of the digital camera 10 in the state in which the printout 1 is placed on a table or attached to the wall, in such a manner that there is no missing portion of at least the retrieval source printout 1 (step S11).

Then, in the digital camera 10, a region extraction unit 12 executes a printout cutting-out process for specifying an image of the retrieval source printout 1 from the image data that is acquired by the image acquisition unit 11, and extracting the region of this image (step S12).

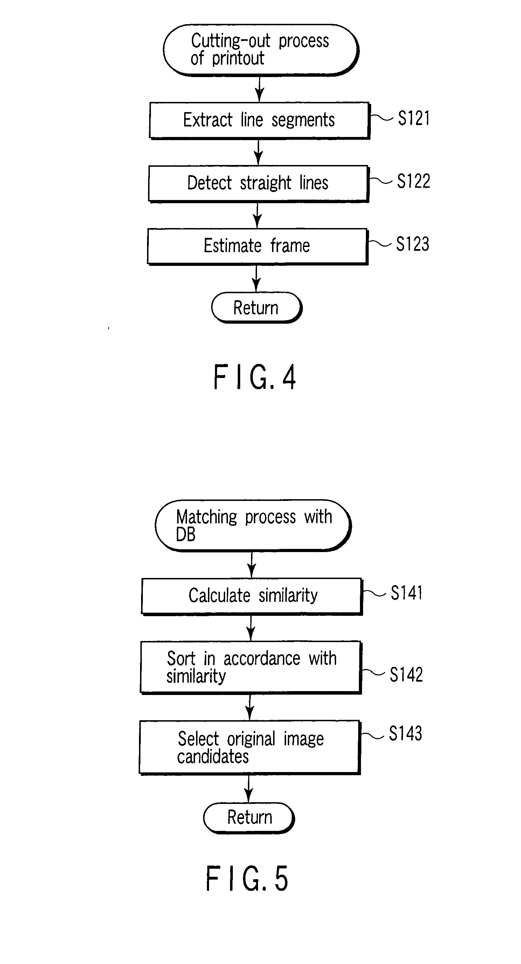

In the printout cutting-out process, as shown in FIG. 4, line segments in the acquired image data are detected (step S121), and straight lines are detected from the detected line segments (step S122). A frame which is formed of four detected straight lines is estimated (step S123). In other words, a region of interest, which is surrounded by the four sides, is found out from the acquired image data. If there are a plurality of regions each surrounded by four sides, a part with a maximum area may be extracted as a region of interest, or a region of interest may be specified on the basis of the vertical/horizontal ratio of the rectangle. In a rare case, the retrieval source printout 1 itself may be distorted in the acquired image data and, as a result, may not be specified as a region surrounded by four sides. In this case, it may be effective to execute a process of recognizing, as a tolerable region, a region in which some of the four sides are formed of gentle arcs. The present process includes a process of normalizing, after extracting the region which is regarded as the retrieval source printout 1, this image data region by affine transform or the like.

Then, a feature value is extracted by a feature value extraction unit 13 from the region of interest extracted by the region extraction unit 12 (step S13). The feature value can be any one of the following types: one type uses feature points in the image data; another type uses relative densities of split areas in the image data in accordance with a predetermined rule, that is, small regions allocated with a predetermined grating; another type in accordance with Fourier transform values corresponding to respective split areas. Preferably, information contained in such feature points includes point distribution information.

Subsequently, a matching unit 14 performs a DB-matching process in the manner that the feature value data, extracted by the feature value extraction unit 13 is compared to the feature value DB (feature value template) of already-acquired image data composed in the storage 20, and data with a relatively high similarity is sequentially extracted (step S14).

More specifically, as shown in FIG. 5, the DB-matching process is carried out as follows. First, similarities with feature value templates of respective already-acquired image data are calculated (step S141), and feature value templates are sorted in accordance with the similarities (step S142). Then, original image candidates are selected in accordance with the similarities (step S143). The selection can be done such that either threshold values are set or high order items are specified in the order of higher similarities. In either way, two methods are available, one for selecting one item with the highest similarity and the other for selecting multiple items in the order from those having relatively higher similarities.

In the case where the feature value that is extracted in step S13 is the feature points and a relative density of the lattice-shaped small regions, the feature value template that is used in the matching process with the DB in step S14 is the feature points and lattice-shaped template. In the lattice-shaped template, a detail part of the picture composition can be subjected to the matching process. In the case of the feature points, the identification of the subject is enabled. For example, the feature points are usable for a meta-analysis such as classification into buildings, persons, flowers, etc. It is also possible to execute stepwise narrowing-down with combinational use of the feature points and lattice-shaped template.

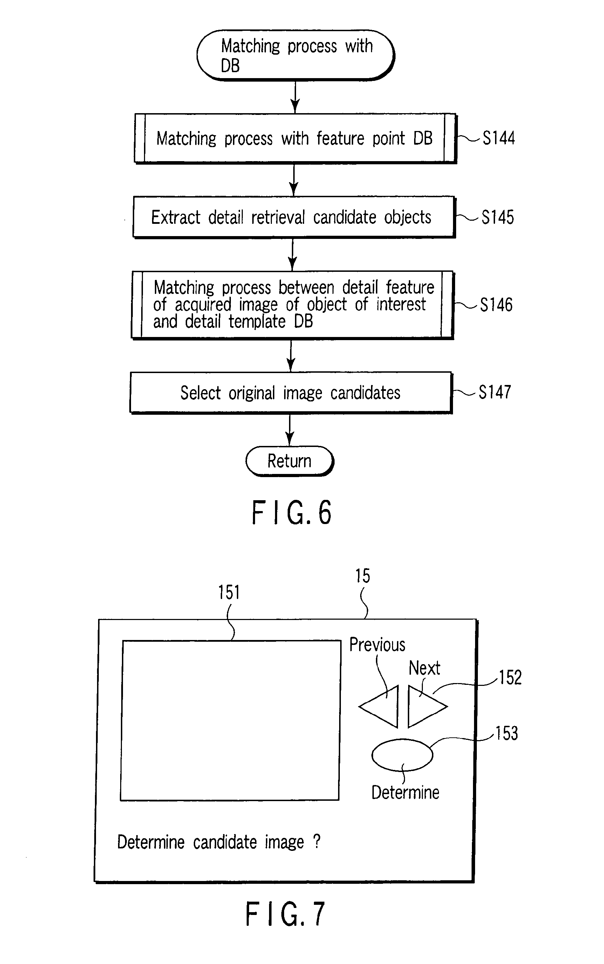

In the case where the feature points and the lattice-shaped template are used in combination, the matching process with the DB in step S14 is as shown in FIG. 6. To begin with, using the feature points extracted in step S13, the feature points are compared with the feature point database (feature point template) of the acquired image data, which is constructed in the storage 20 (step S144). The feature points with high similarity are extracted as detail search candidate objects (step S145). At this stage, the feature points extracted from a low-resolution image are used. It is thus possible that a difference in a fine part cannot be discriminated. Next, using the lattice-shaped small region extracted in step S13, the lattice-shaped small region is compared with the detail database (detail template (lattice-shaped template)) of the acquired image data, which is constructed in the storage 20. Thereby, a difference in a fine part is discriminated (step S146) and original image candidates are selected (step S147).

Thereafter, image data of the selected original image candidates are read from the storage 20 and are displayed on a display unit 15 as image candidates to be extracted (step S15), thereby to receive a selection from the user (step S16).

FIG. 7 shows a display screen of the display unit 15 in the event of displaying only one image candidate. The display screen has "PREVIOUS" and "NEXT" icons 152 and a "DETERMINE" icon 153 on a side of a display field of an image candidate 151. The "PREVIOUS" and "NEXT" icons 152 represent a button that is operated to specify display of another image candidate. The "DETERMINE" icon 153 represents a button that is operated to specify the image candidate 151 as desired image data. The "PREVIOUS" and "NEXT" icons 152 respectively represent left and right keys of a so-called four direction arrow key ordinarily provided in the digital camera 10, and the "DETERMINE" icon 153 represents an enter key provided in the center of the four direction arrow key.

In the event that the four direction arrow key, which corresponds to the "PREVIOUS" or "NEXT" icon 152 (step S17), is depressed, the process returns to step S15, at which the image candidate 151 is displayed. In the event that the enter key, which corresponds to the "DETERMINE" icon 153, is depressed (step S17), the matching unit 14 sends to the connected printer 30 original image data that corresponds to the image candidate 151 stored in the storage 20, and the image data is again printed out (step S18). When the storage 20 is not connected to the printer 30 through a wired/wireless network, the process of performing predetermined marking, such as additionally writing a flag, is carried out on the original image data corresponding to the image candidate 151 stored in the storage 20. Thereby, the data can be printed out by the printer 30 capable of accessing the storage 20.

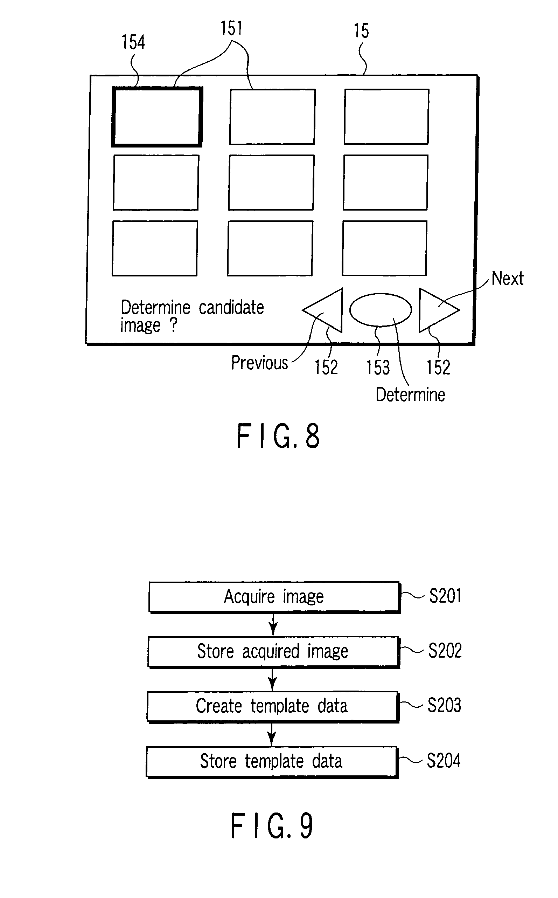

In step S15 of displaying the image candidate, a plurality of candidates can be displayed at one time. In this case, the display unit 15 ordinarily mounted to the digital camera 10 is, of course, of a small size of several inches, such that displaying of four or nine items is appropriate for use. FIG. 8 is view of a display screen in the event of displaying nine image candidates 151. In this case, a bold-line frame 154 indicating a selected image is moved in response to an operation of a left or right key of the four direction arrow keys, respectively, corresponding to the "PREVIOUS" or "NEXT" icon 152. Although specifically not shown, the arrangement may be such that the display of nine image candidates 151 is shifted, that is, so-called page shift is done, to a previous or next display of nine image candidates by operating an up or down key of the four direction arrow key.

The feature value DB of the already-acquired image data composed in the storage 20 as comparative objects used in step S14 has to be preliminarily created from original image data stored in the storage 20. The storage 20 can be either a memory attached to the digital camera 10 or a database accessible through a communication unit as shown by a broken line in FIG. 2.

Various methods are considered for creation of the feature value DB.

One example is a method that carries out calculation of feature value and database registration when storing acquired image data in the original-image acquiring event into a memory area of the digital camera 10. More specifically, as shown in FIG. 9, the digital camera 10 performs an image acquiring operation (step S201), and the acquired image data thereof is stored into the memory area of the digital camera 10 (step S202). From the stored acquired image data, the feature value is calculated and template data is created (step S203). The created template data is stored in association with the acquisition image data (step S204). Thus, in the case that the storage 20 is a built-in memory of the digital camera 10, a database is built therein. Alternatively, in the case that the storage 20 is a separate device independent of the digital camera 10, the acquired image data and template data stored into the memory area of the digital camera 10 are both transferred into the storage 20, and a database is built therein.

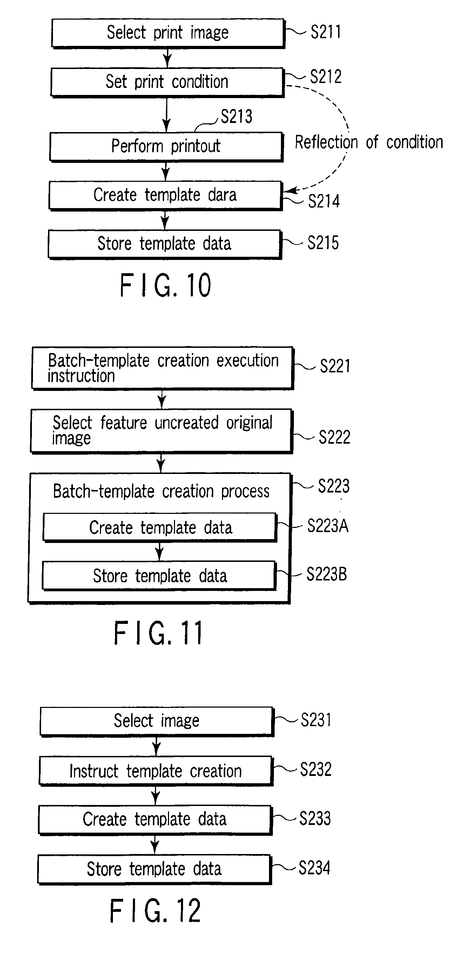

Another method is such that, when original image data stored in the storage 20 is printed out by the printer 30, printing-out is specified, and concurrently, a feature value extraction process is carried out, and the extracted feature value is stored in the database, therefore producing high processing efficiency. More specifically, as shown in FIG. 10, when printing out original image data stored in the storage 20, ordinarily, the original image data to be printed out is selected in response to a user specification (step S211); and printout conditions are set (step S212), whereby printing is executed (step S213). Ordinarily, the printing process is completed at this stage; however, in the present example, processing is further continued, thereby to calculate the feature value from the selected original image data and create template data (step S214). The created template data is stored in association with the original image data (step S215). In the event of creating the template data, the printout conditions are reflected in the operation, thereby making it possible to improve matching accuracy between the retrieval source printout 1 and the template data. According to the method, template data is created only for original image data that may be subjected to the matching process, consequently making it possible to save creation time and storage capacity for unnecessary template data.

Further, of course batch processing can be performed. More specifically, as shown in FIG. 11, when a batch template creation specification from a user is received (step S221), template uncreated original image data in the storage 20 is selected (step S222), and a batch template creation process is executed on the selected template uncreated original image data (step S223). In the batch template creation process, a feature value is extracted from the respective template uncreated original image data to create template data (step S223A), and the created template data is stored into the storage 20 in correlation with the corresponding original image data (step S223B).

Further, the data can be discretely processed in accordance with the input of a user specification. More specifically, as shown in FIG. 12, one item of original image data in the storage 20 is selected by the user (step S231), and creation of template data for the selected original image data is specified by the user (step S232). Thereby, a feature value is extracted from the selected original image data and template data is created (step S233), and the created template data is stored into the storage 20 in correlation with the selected original image data (step S234).

Conventionally, in many cases, when again printing out image data, which was previously printed out, a user retrieves the data with reference to supplementary information (such as file name and image acquired date/time) of the image data. However, according to the retrieval system of the present embodiment, only by acquiring the image of the desired retrieval source printout 1 by using the digital camera 10, a file (image data) of the original image can be accessed, therefore making it possible to provide a retrieval method intuitive and with high usability for users.

Further, not only the original image data itself, but also image data similar in image configuration can be retrieved, thereby making it possible to provide novel secondary adaptabilities. More specifically, an image of a signboard or poster on the street, for example, is acquired in a so-called retrieval mode such as described above. In this case, image data similar or identical to the acquired image data can easily be retrieved from image data and feature value data thereof existing in the storage 20, such as database, accessible through, for example, the memory attached to the digital camera 10 and communication.

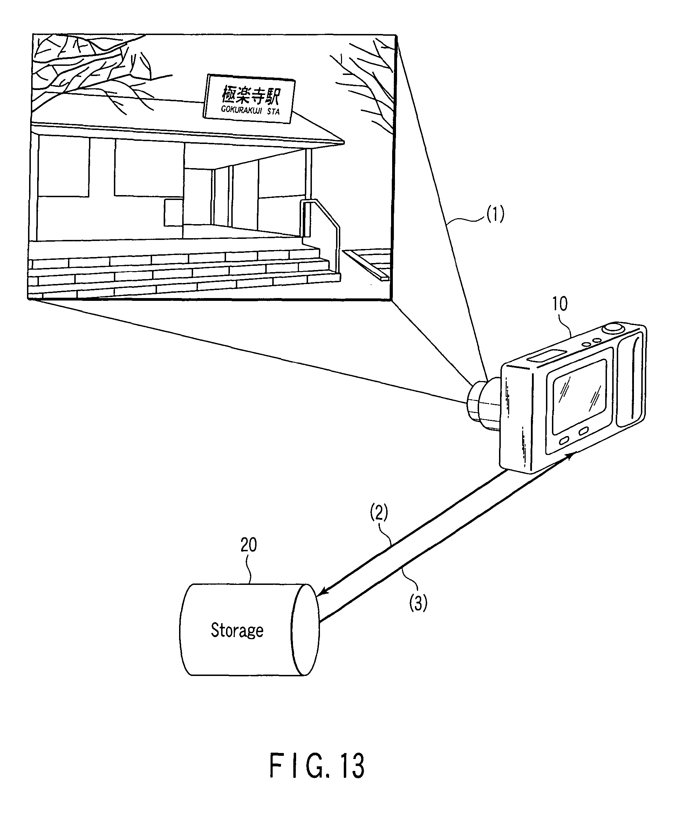

Further, suppose that, as shown in FIG. 13, for example, an image of a station name of a station as a sign board is acquired. In this event, the station name is recognized from image data thereof, thereby to make it possible to recognize the position of a photographer. Thus, recognized relevant information, such as peripheral portion of the recognized station, i.e., map information of the peripheral portion of the station, image information, and relevant character (letter) information, can be provided by being retrieved from relevant information existing in the storage 20, such as database, accessible through, for example, the memory attached to the digital camera 10 and communication. As a method of recognizing such a station name, there are available methods, such as those of character recognition, pattern recognition, recognition estimation based on retrieval of similar images, and these methods can be practiced by functions of the matching unit 43.

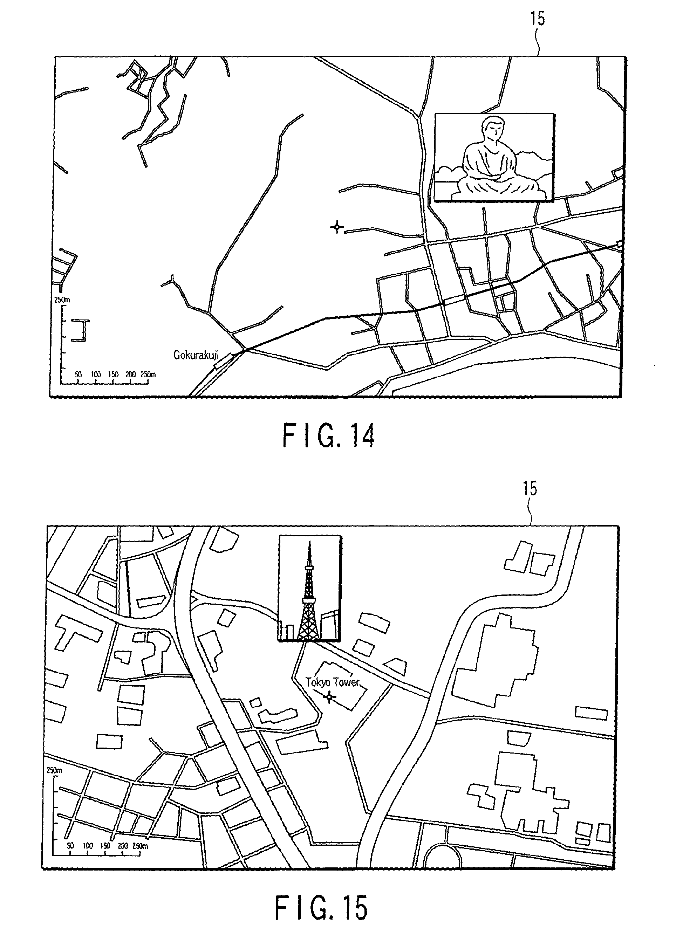

Further, an example case is assumed in which an image of the Tokyo Tower is acquired. In this case, images existing in the storage 20, such as database, accessible through, for example, the memory attached to the digital camera 10 and communication are retrieved, whereby photographs of not only the Tokyo Tower, but also photographs of tower-like buildings in various corners of the world can be retrieved and extracted. Further, in accordance with the position information provided as additional information of respective photographs thus retrieved and extracted, the locations of the respective towers can be informed, or as shown in FIGS. 14 and 15, displaying can be performed by superimposing the photograph over the location on a map. In this case, maps and photographs are relevant information.

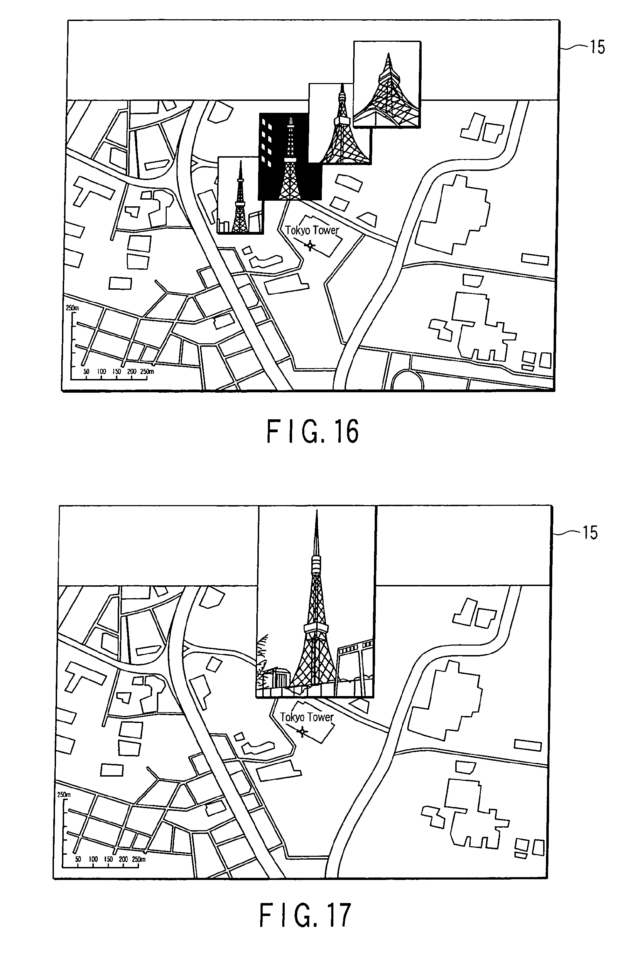

In the event of superimposed display of a photograph over a map, a case can occur in which many images are overlapped and less visible depending on factors, such as the map scale, the photograph size, the number of photographs relevant to the location. In such a case, as shown in FIG. 16, technical measures are taken such that, for example, the display size of photograph is changed corresponding to the map scale; and as shown in FIG. 17, in the event of a large number of photographs, only one representative photograph is displayed instead of displaying photographs in the display size proportional to the number of photographs.

In the above, although it has been described that the process of steps S12 to S17 is carried out within the digital camera 10, the process can be carried out in a different way as follows. In the case where the storage 20 is provided as a separate resource independent of the digital camera 10, the process described above can be actually operated by being activated in the form of software in the storage 20 or by being separated into the digital camera 10 and the storage 20.

[Second embodiment]

An outline of a retrieval system of a second embodiment of the present invention will be described herebelow with reference to FIG. 1.

The retrieval system includes a digital camera 10, a storage 20, a printer 30, and a personal computer (PC) 40. The storage 20 is a storage device built in the PC 40 or accessible by the PC 40 through communication. The PC 40 is wired/wireless connected to the digital camera 10, or alternatively is configured to permit a memory detached from the digital camera 10 to be attached, thereby being able to read image data stored in the memory of the digital camera 10.

The retrieval system thus configured performs operation as follows.

(1) First, the digital camera 10 acquires an image of a photographic subject including a retrieval source printout 1 once printed out by the printer 30.
(5) The PC 40 extracts a region corresponding to the image of the retrieval source printout 1 from the image data acquired, and then extracts a feature value of the extracted region.
(6) Then, the PC 40 executes template matching process of the extracted feature value with the templates stored in the storage 20.
(7) As a consequence, the PC 40 reads image data corresponding to matched template as original image data of the retrieval source printout 1 from the storage 20.
(8) Thereby, the PC 40 is able to again print out the read original image data by the printer 30.

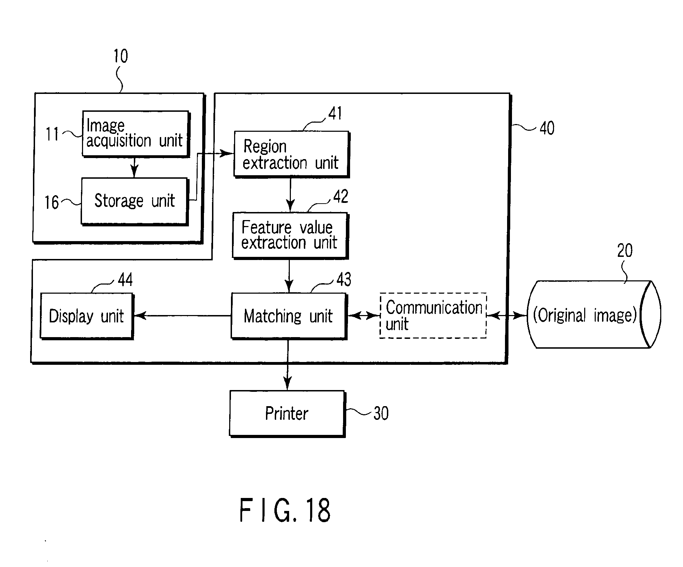

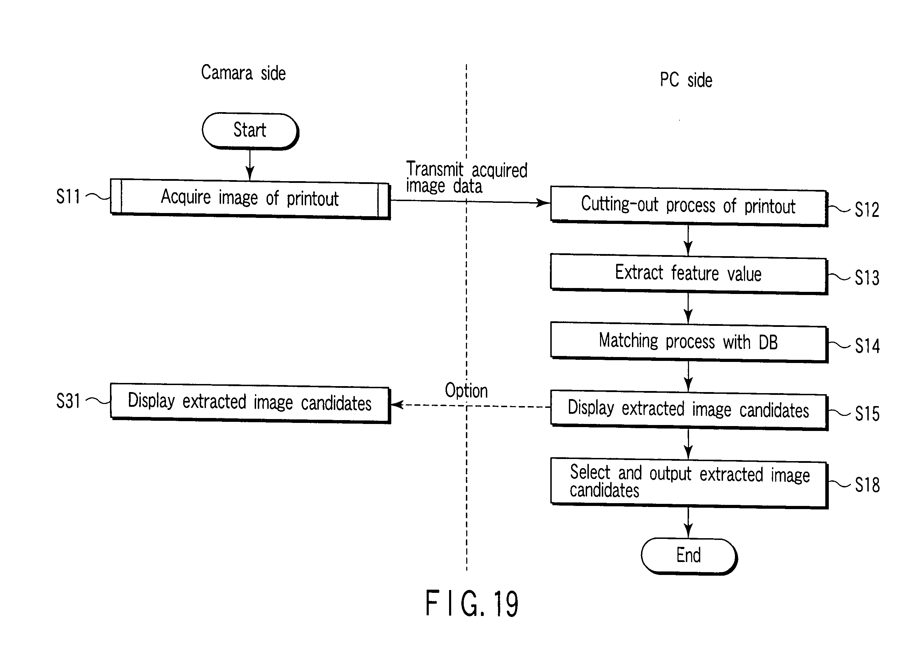

The retrieval system of the second embodiment will be described in more detail with reference to a block diagram of configuration shown in FIG. 18 and an operational flowchart shown in FIG. 19. In these figures, the same reference numerals designate the portions corresponding to those of the first embodiment.

The present embodiment contemplates a case where image data acquired by the digital camera 10 is stored into the storage 20 built in or connected to the PC 40 designated by a user, and a process shown on the PC side in FIG. 19 operates in the PC 40 in the form of application software. The application software is activated in the state that the PC 40 and the digital camera 10 are hard wired or wirelessly connected together thereby to establish a communication state. The state may be such that functional activation is carried out through the operation of tuning on a switch such as a "retrieval mode" set for the digital camera 10.

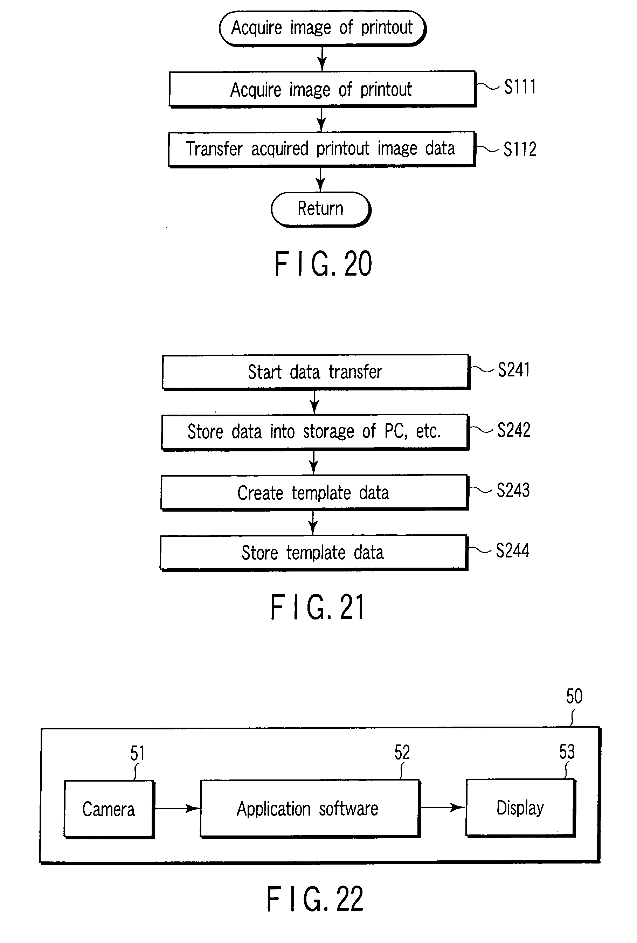

With the application software having thus started the operation, an image acquisition process for acquiring an image of a printout is executed on the side of the digital camera 10 (step S11). More specifically, as shown in FIG. 20, a user operates an image acquisition unit 154 of the digital camera 10 to acquire an image of a retrieval source printout 1 desired to be again printed out in the state where it is pasted onto, for example, a table or a wall face so that at least no omission of the retrieval source printout 1 occurs (step S111). Thereby, acquired image data is stored into a storage unit 176 serving as a memory of the digital camera 10. Then, the acquired image data thus stored is transferred to the PC 40 hard wired or wirelessly connected (step S112).

Then, in the PC 40, a region extraction unit 41, which is realized by the application software, executes a printout cutting-out process for specifying an image of the retrieval source printout 1 from the transmitted acquired image data, and specifying/extracting this image part (step S12). Next, a feature value extraction unit 42, which is realized by the application software, executes a process of extracting a feature value from the specified/extracted region of interest (step S13). The cutting-out process and feature value extraction process may be executed on the digital camera 10 side. Thereby, the amount of communication from the digital camera 10 to the PC 40 can be reduced.

Subsequently, a matching unit 14 realized by application software performs a DB-matching process such that the extracted feature value data are compared to the feature value DB of already-acquired image data composed in the storage 20, and those with relatively high similarities are sequentially extracted (step S14). More specifically, in accordance with the calculated feature value data, the matching unit 14 on the PC 40 side performs comparison with the feature value data sets stored in correlation to respective items of image data in the storage 20 (or, comprehensively stored in the form of a database), and most similar one is selected. It is also effective in usability to set such that a plurality of most similar feature value candidates is selected. The feature value data includes specification information of original image data from which the feature value have been calculated, and candidate images are called in accordance with the specification information.

Thereafter, image data of the selected original image candidates (or candidate images) are read from the storage 20 and are displayed on a display unit 44 serving as a display of the PC 40 as image candidates to be extracted (step S15), whereby to receive a selection from the user. In this case, the processing may be such that the selected original image candidates (or the candidate images) are transferred as they are or in appropriately compressed states from the PC 40 to the digital camera 10, and are displayed on the display unit 15 of the digital camera 10 (step S31).

Then, in response to a selection performed through the operation of a mouse or the like, original image data corresponding to the image candidate stored in the storage 20 is sent to the connected printer 30 and is printed thereby (step S18). More specifically, the displayed original image candidate is determined through determination of the user and is passed to the printing process, thereby to enable the user to easily perform the preliminarily desired reprinting of already-printed image data. In this event, not only printing is simply done, but also the plurality of selected candidate images result in a state that "although different from the desired original image, similar images have been collected", depending on the user's determination, thereby realizing the function of batch retrieval of similar image data.

In the present embodiment, the feature value DB can be created in the event of transfer of the acquired image data from the digital camera 10 to the storage 20 through the PC 40. More specifically, with reference to FIG. 21, transfer of the acquired image data from the digital camera 10 to the PC 40 is started (step S241). Then, by using the PC 40, the transferred acquired image data is stored into the storage 20 (step S242), and the template data is created from the acquired image data (step S243). Then, the created template data is stored into the storage 20 in correlation with the acquired image data (step S244).

Thus, according to the second embodiment, similarly to the first embodiment, only by acquiring the image of the desired retrieval source printout 1 by using the digital camera 10, a file (image data) of the original image can be accessed, thereby making it possible to provide a retrieval method intuitive and with high usability for users.

Further, not only the original image data itself, but also image data similar in image configuration can be retrieved, thereby making it possible to provide novel secondary adaptabilities. More specifically, an image of a signboard or poster on the street, for example, is acquired in a so-called retrieval mode such as described above. In this case, image data similar or identical to the acquired image data can easily be retrieved from image data and feature values data thereof existing in the storage 20, such as an external database, accessible through, for example, the memory attached to the digital camera 10 and a communication unit shown by the broken line in FIG. 5. Further, Internet sites associated to the data can be displayed on the displays of, for example, the PC 40 and digital camera, and specific applications (for audio and motion images (movies), for example) can be operated.

Description has been given with reference to the case where the digital camera 10 is used, the present embodiment is not limited thereto, and a scanner can be used.

Further, while an image of the retrieval source printout 1, which has actually been printed out, is acquired by the digital camera 10, an image of a display displaying the acquired image of the retrieval source printout 1, for example, can be acquired by the digital camera 10.

[Third Embodiment]

A retrieval system of a third embodiment will be described herebelow. The present embodiment is an example of adaptation to application software 52 of a mobile phone 50 with a camera 51, as shown in FIG. 22.

Mobile phone application software is at present usable with most mobile phones, and a large number of items of image data are storable in a memory such as an internal memory or an external memory card. Further, in specific mobile phone sites (mobile phone dedicated Internet sites), storage services for, for example, user-specified image files are provided. In these environments, a very large number of image data can be stored, thereby to make it possible to use them for various user's own activity recording and jobs. On the other hand, however, retrieval of desired image data is complicate and burdensome for hardware of the mobile phone having the interface relatively inferior in freedom degree. In most cases, actual retrieval is carried out from a list of texts representing, for example, the titles or date and time of image data. As such, it must be said that, in the case of large number of image data, the retrieval is complicate and burdensome; and even when keying-in a text, it is inconvenient to input a plurality of words or a long title, for example.

According to the present retrieval system installed, the system is operated as the application of the camera mobile phone, thereby to carry out the activation of "image input function", "segmentation of a region of interest", and "feature value calculation." The feature value (data) is transmitted to a corresponding server via a mobile phone line. The corresponding server can be provide in a one to one or one to multiplicity relation with respect to the camera or cameras. The feature value sent to the server is actually subjected to the process of matching by a "matching function" provided in the server with the feature value data sets read from a database required by the server. Thereby, image data with high similarity is extracted. The image data thus extracted is returned to the call-side mobile phone from the server, whereby the image data can be output by a printer unspecified from the mobile phone. In the case that various types of information relevant to the image data are further added to the image data extracted by the server, an extended function "the information is returned to the mobile phone" can be implemented. Further, the extracted image data is highly compressed and returned to the mobile phone, and after a user verifies that the data is a desired image data, the data is stored in the memory area of the mobile phone or is displayed on a display 53 of the mobile phone. Even only from this fact, it can of course be said that the system is useful.

[Fourth Embodiment]

A retrieval system of a fourth embodiment will be described herebelow.
The present embodiment comprises a digital camera 10 including a communication function, which is an image acquisition function-equipped communication device such as a camera-equipped mobile phone, and a server connected by communication. The function for image retrieval is dividedly provided in the digital camera 10 and the server.
In this case, similarly as in the first embodiment, the digital camera 10 includes the image acquiring function and a calculation function for calculating the feature value from the image data. In any one of the first to third embodiments, the feature value data sets (or the feature value DB) to be compared and referred are originally created based on images acquired and printed out by users or the digital camera 10. This is attributed to the fact that the initial purpose is to image printouts of already-acquired image data and to carry out retrieval. In comparison, the present embodiment is configured by extending the purpose and is significantly different in that feature values calculated based on images of, for example, on-the-street sign boards, posters, printouts, and publications are also stored into the database formed in the storage 20 of the server.
Of course, not only printing out, but also extraction from images contained in the database can be accomplished.
Further, feature points extracted from an acquired image can be added to the database.
In the event of registration, position information relevant to the image is recognized manually, by a sensor such as a GPS, or by the above-described character recognition, and then is registered. In this manner, in the event of acquiring a next time image in a similar location, a similar image is extracted by retrieval from the database, whereby the position information desired to be added to the acquired image can be extracted.

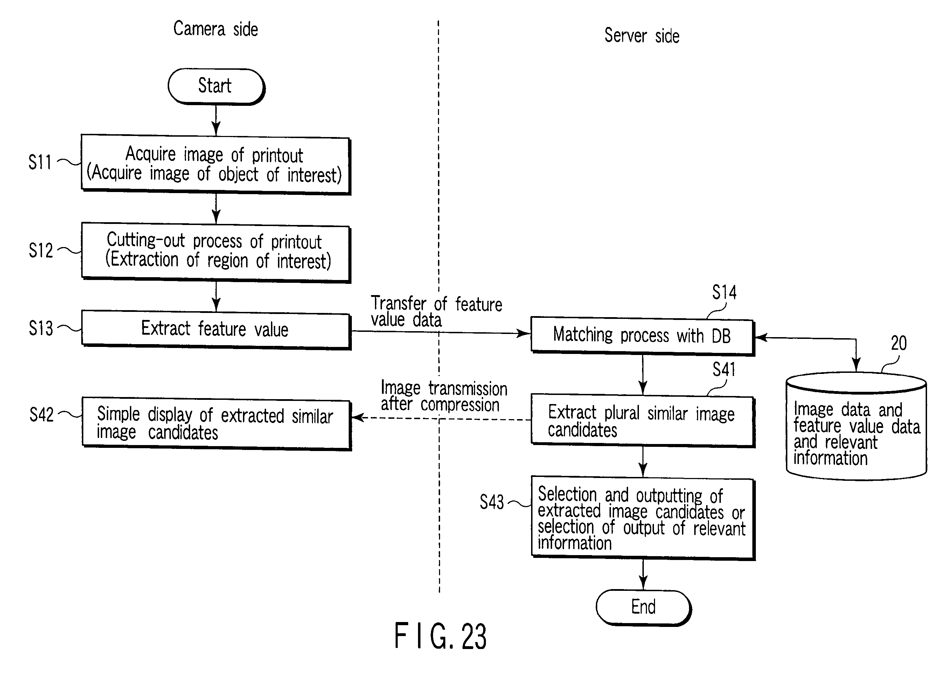

FIG. 23 is a flowchart showing operation of the retrieval system of the present embodiment. In the figure, the same reference numerals designate the portions corresponding to those in the first embodiment.
In the present embodiment, an image of a poster such as a product advertisement present on the street is acquired by the digital camera 10, for example (step S11). Then, based on the acquired image data, the digital camera 10 executes the cutting-out process and feature value extraction process (step S12, step S13). The extracted feature value is sent to a predetermined server by the communication unit built in or attached to the digital camera 10.
In the server, the feature value DB formed in the storage 20 accessible by the server is looked up (accessed), and feature value data sent from the digital camera 10 is compared thereto (step S14), thereby to extract similar image candidates having similar feature value data (step S41). Image data of the extracted similar image candidates are, by necessity, subjected to a predetermined compression process to reduce the amount of communication, and then are sent to the digital camera 10, whereby the candidates can be simply displayed on the display unit 15 of the digital camera 10 (step S42). Thereby, user selection can be performed similarly as in the first embodiment.
Then, image data of an image candidate extracted (and selected) is sent and output to the digital camera 10; or alternatively, a next operation is carried out in accordance with specified information correlated to the feature value of the extracted (and selected) image candidate (step S43). In the case of the product advertisement, the next operation can be, for example, description of the product or connection to a mail-order site or returning of a screen of the site, as image data, to the digital camera 10. Further, in the event that an image of an on-the-street signboard has been acquired, also peripheral information of the signboard is retrieved as a feature value. Further, for example, data of the location of a wireless communication base station during communication is compared, thereby to make it possible to present identifications of, for example, the location and address, as information to the user.

[Fifth Embodiment]

A retrieval system of a fifth embodiment will be described herebelow.

The present embodiment retrieves multiple items of image data from a storage 20 by matching using a first template in accordance with an acquired image of an acquired retrieval source printout 1. In addition, the embodiment retrieves a single or multiple items of image data from the multiple items of image data, obtained as a result of the retrieval by template matching using a second template of a region narrower than the first template and high in resolution.

The retrieval system of the present embodiment has a configuration similar to that of the first embodiment. Particularly, in the present embodiment, the storage 20 is configured to include a total feature value DB containing general templates registered as first templates, and a detail feature value DB containing detail templates registered as second templates.

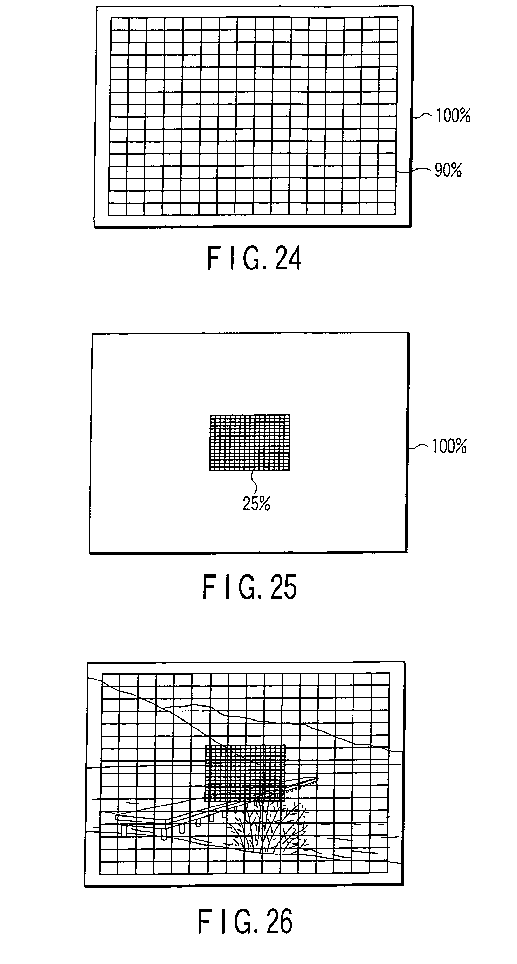

As shown in FIG. 24, the general template is obtained by extracting feature value data of a region containing most (about 90%, for example) of the totality (100%) of image data at a relatively coarse (low) resolution. As shown in FIG. 25, the detail template is obtained by extracting feature value data of a region containing a central region portion (about central 25%, for example) of the image data at a high resolution relative to the resolution of the general template. The positional relationship between the original image data and the general and detail templates is shown in FIG. 26.

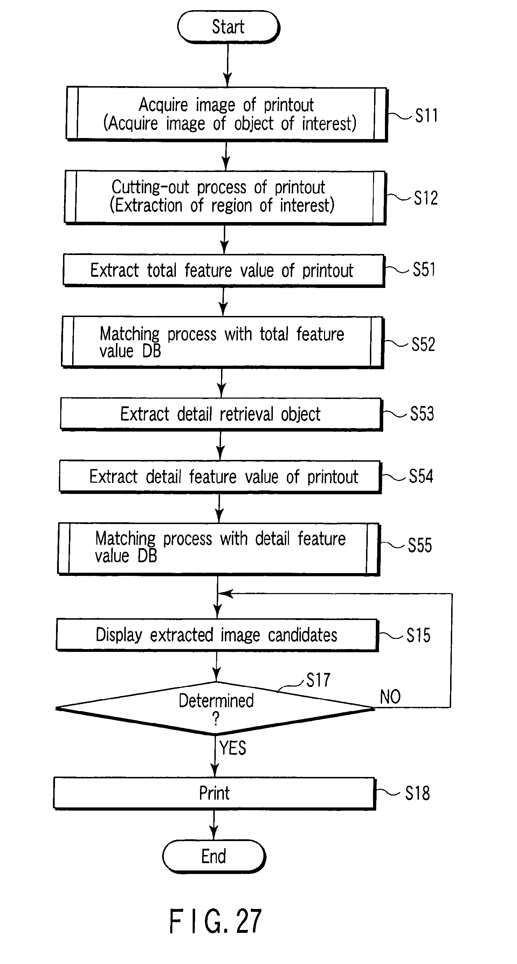

FIG. 27 is a flowchart showing operation of the retrieval system of the present embodiment. In the diagram, the same reference numerals designate the portions corresponding to those in the first embodiment.

Similarly as in the first embodiment, in the present embodiment, first, a digital camera 10 set in a retrieval mode acquires an image of a retrieval source printout 1 desired to be printed out again in the state where it is pasted onto, for example, a table or a wall face so that at least no omission of the retrieval source printout 1 occurs (step S11). Then, the region extraction unit 12 of the digital camera 10 executes a printout cutting-out process for specifying an image of the retrieval source printout 1 from the image data acquired by the image acquisition unit 11, and specifying/extracting this image part (step S12).

Subsequently, the feature value extraction unit 13 executes a total feature value extraction process for extracting a feature value from the entire image data of the region of interest that is specified/extracted by the region extraction unit 12 (step S51). Then, a matching process with the total feature value DB, which compares the extracted total feature value data to the total feature value data base composed in the storage 20 and containing registered general templates and sequentially extracts data with a relatively high similarity, is executed by a matching unit 14 (step S52).

Thereafter, in the region extraction unit 12, a detail retrieval object region, namely image data of the central region portion of the region of interest in the present example, is further extracted as detail retrieval object image data from the identified and extracted image data of the total region of interest (step S53). Then, a detail feature value extraction process for extracting a feature value from the detail retrieval object image data extracted in the region extraction unit 12 is performed by the feature value extraction unit 13 (step S54). Subsequently, in the matching unit 14, a matching process with the detail feature value DB, which compares the extracted detail feature value data to the detail feature value data base formed in the storage 20 and having registered detail templates and sequentially extracts data with higher similarity, is executed (step S55). In this case, however, template matching with all detail templates registered into the detail feature value DB is not performed, but template matching is executed only for detail templates corresponding to multiple items of image data extracted by the matching process with the total feature value DB in the step S52. Therefore, although the template matching process with the detail templates takes a process time by nature as the resolution is high, the process can accomplished within a minimum necessary time. As a criterion for the extraction in the matching process with the total feature value DB in step S52, such a method is employed that provides a threshold value for the similarity or that fixedly selects high order 500 items.

After the image data with high similarity are extracted as original image candidates by the matching process with the detail feature value DB, the candidates are displayed on the display unit 15 as image candidates for extraction (step S15), thereby to receive a selection from the user. If an image desired by the user is determined (step S17), then the matching unit 14 sends original image data corresponding to the image candidate stored in the storage 20 to the connected printer 30; and the data is again printed out (step S18).

According to the present embodiment, quality (satisfaction level) of the retrieval result of the original image data and an appropriate retrieval time period are compatible with one another.

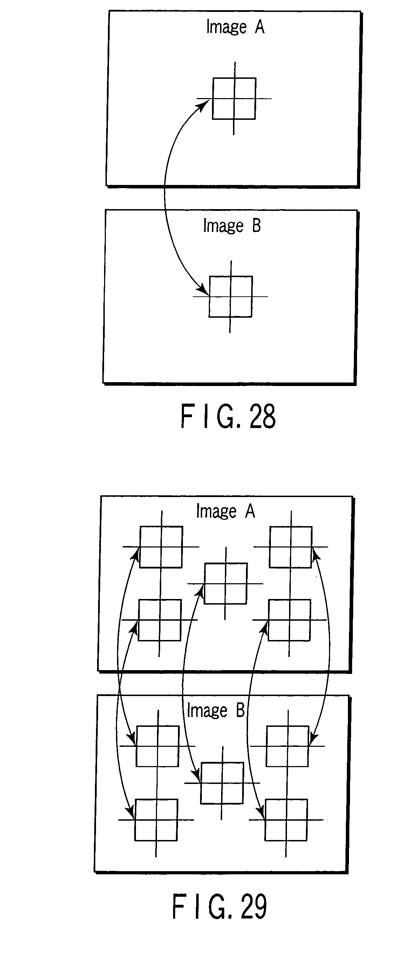

Further, the retrieval result incorporating the consideration of the attention region for the photographer can be obtained. More specifically, ordinarily, the photographer acquires an image of a main photographic subject by capturing it in the center of the imaging area. Therefore, as shown in FIG. 28, the detail templates with attention drawn to the center of the image data are used to obtain a good retrieval result. Accordingly, in the system in which original image data is retrieved and extracted from retrieval source printout 1, which is the printed out photograph, and copying thereof is easily performed, the effectiveness is high in retrieval of the printed photograph.

Further, in retrieval from an original image population for which keyword classification and the like are difficult, the effectiveness as means for performing high speed determination of small differences is high. That is, the retrieval result can be narrowed down in a stepwise manner with respect to a large population.

Also in the present embodiment, the general template and the detail template have to be preliminarily created and registered into the database for one item of original image data. The registration can be performed as described in the first embodiment. However, both the templates do not necessarily have to be created at the same time. For example, the method can be such that the detail template is created when necessary in execution of secondary retrieval.

Further, the detail template is not limited to that as shown in, for example, FIG. 25 or 28, which draws attention to the central portion.

For example, as shown in FIG. 29, detail templates can be set in several portions of the image. Failure due to a print-imaging condition can be prevented by thus distributively disposing detail templates. Thereby, convergence can be implemented by dynamically varying, for example, the positions and the number of detail templates.

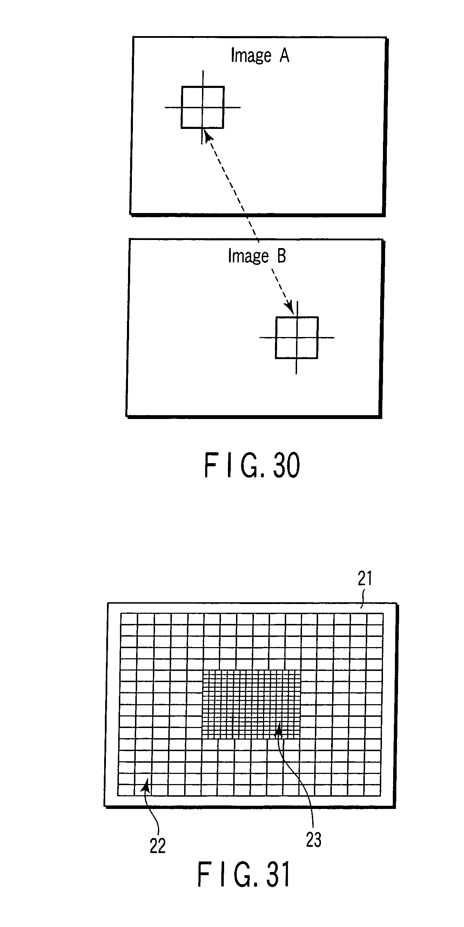

Further, as shown in FIG. 30, the detail template may be such that an attention region can be placed in a focus position in the event of acquiring an original image. With such detail template, a result reflecting the intention of a photographer can be expected.

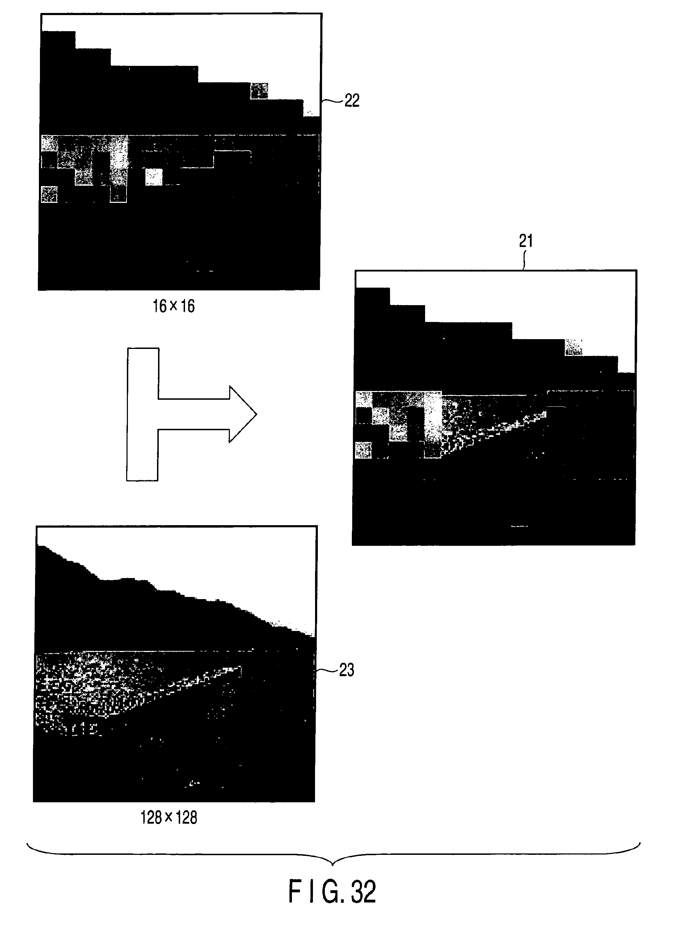

As is shown in FIG. 31, a composite template 21, in which a low-resolution outline template 22 and a high-resolution detail template 23 are included in the same image, may be constructed and, like the first embodiment, a template matching process may be executed only once. For example, as shown in FIG. 32, an outline template 22 (16 X 16 template) and a detail template 23 (128 X 128 template) are combined to form a composite template 21. According to this composite template 21, both a high speed and a stable retrieval result can be achieved. In addition, even if the arrangement and structure of the high-resolution region are altered, the entire configuration can be handled without alteration.

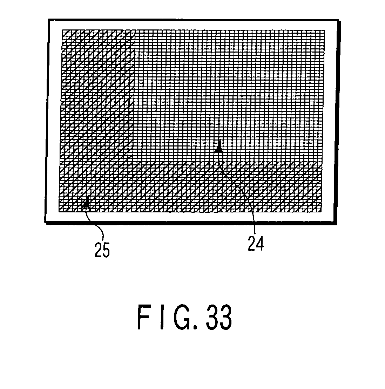

Further, as shown in FIG. 33, a detail template may be created with respect to the same region as an outline template and may be registered in the database. At the time of template matching with an actual detail template, a part of the region, that is, a region as shown in FIG. 28 to FIG. 30, may be used as a reference region 24, and the other region may be used as a non-reference region 25.

The present embodiment has been described in association with the first embodiment. Needless to say, the present embodiment is applicable to the second to fourth embodiments.

The calculation of the feature value in this embodiment may be executed by a method based on the positional relationship between feature points.

[Sixth Embodiment]

A retrieval system of a sixth embodiment will be described herebelow.

The retrieval system of the present embodiment is an example using a digital camera 10 including communication function which is an image acquiring function mounted communication device such as a camera mobile phone. The embodiment is adapted in the case where a preliminarily registered image is acquired to thereby recognize the image, and a predetermined operation (for example, activation of an audio output or predetermined program, or displaying of a predetermined URL) is executed in accordance with the recognition result.

When an image is recognized, while image data is registered as a reference database (so-called dictionary data), it is more efficient and practical to compare the feature values of images than to compare the images as they are, such that a feature value database extracted from images is used. The database can be of a built-in type or a type existing in the server through communication.

In the present embodiment, an arrangement relationship of feature points of an image is calculated as a combination of vector quantities, and a multigroup thereof is defined to be the feature value. In this event, the feature value is different in accuracy depending on the number of feature points, such that as the fineness of original image data is higher, a proportionally larger number of feature points are detectable. As such, for the original image data, the feature value is calculated under a condition of a highest-possible fineness. In this event, when the feature value is calculated for the same image element in accordance with image data with a reduced fineness, the number of feature points is relatively small, such that the feature value itself has a small capacity. In the case of a small capacity, while the matching accuracy is low, advantages are produced in that, for example, the matching speed is high, and the communication speed is high.

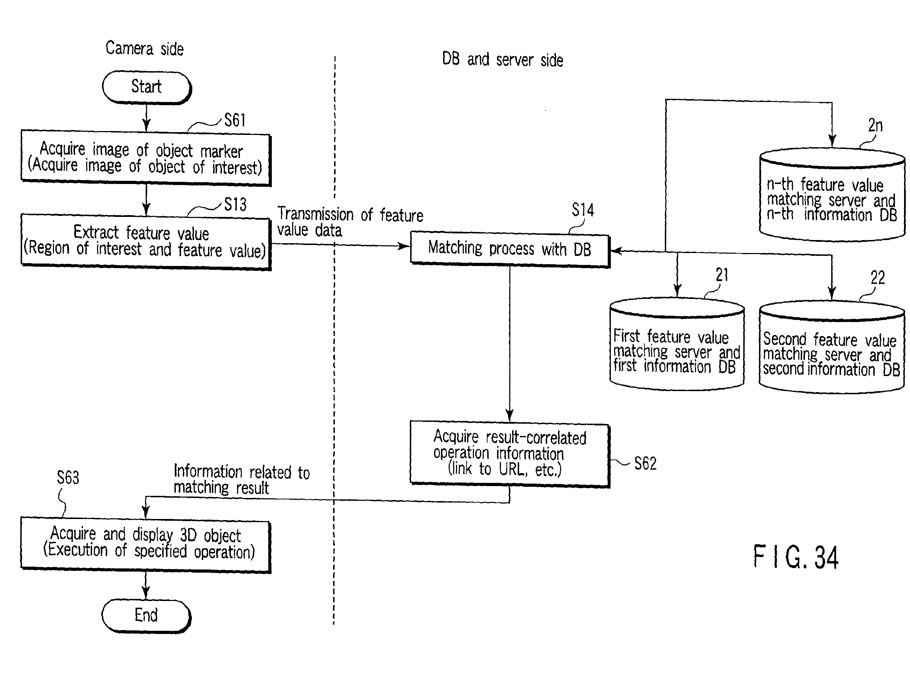

In the present embodiment, attention is drawn on the above-described. More specifically, in the event of registration of image data as reference data (template), when one image element is registered, the feature value is calculated from a plurality of different finenesses, thereby to configure databases specialized corresponding to the respective finenesses. Corresponding matching servers are connected to the respective databases and arranged to be capable of providing parallel operation. More specifically, as shown in FIG. 34, a first feature value matching server and first information DB 21, a second feature value matching server and second information DB 22, ..., and an n-th feature value matching server and n-th information DB 2n are prepared. The second feature value matching server and second information DB 22 to the n-th feature value matching server and n-th information DB 2n are each a database having feature values with higher fineness or in a special category in comparison to the first feature value matching server and first information DB 21.

With the matching process system thus prepared, as shown in FIG. 34, an image of a design (object) already registered is acquired by the communication function mounted digital camera 10 (step S61). Then, feature value data is calculated from the arrangement relationship of the feature points by application software built in the digital camera 10 (step S13). Then, the feature value data is transmitted to the respective matching servers through communication, whereby matching process with the respective DBs is carried out (step S14). In the event that a matching result is obtained by the matching process, then operation information (such as a URL link) correlated to the result is obtained (step S62), and the operation information is transmitted to the digital camera 10, whereby a specified operation, such as displaying of 3D object acquirement, is performed (step S63).

In this event, suppose that the camera resolution is about two million pixels. In this case, also when performing retrieval in the matching server through communication, if matching is performed by using data from a feature value DB having a resolution of about two million pixels, an erroneous-recognition ratio is low. However, matching in a concurrently operating feature value DB with a low resolution (VGA class resolution, for example) is responsive at high speed, and thus the result is transmitted earlier to the digital camera 10. It is advantageous in speed and recognition accuracy to thus parallel arrange the matching servers corresponding to the resolutions. However, a case can occur in which a response (result) from the followingly operating high-resolution matching server is different from an already-output result of the low-resolution matching server. In such a case, displaying in accordance with the earlier result is first carried out, and then it is updated to a display in accordance with the following result. In the event of recognition of, for example, a banknote, although the result in the low resolution matching is a level of "¥10000 note", a more detailed or proper result, such as "¥10000 note with the number ZTA473298SPK", due to the higher fineness can be obtained in the high resolution matching.

In addition, as described above, the capacity of the feature value itself is large in the high resolution matching server. A feature value in an XGA class increases to about 40 kB; however, the capacity is reduced to about 10 kB by preliminary low resolution matching. Further, in the second or higher matching server and database, when only a difference from a lower low resolution database is retained, a smaller database configuration is realized. This leads to an increase in the speed of the recognition process. It has been verified that, when extraction with template (method in which area allocation is carried out, and respective density values are compared) is advanced for feature value, the feature value is generally 10 kB or lower, and also multidimensional feature values obtained by combining the two methods appropriately are useful to improve the recognition accuracy.

As described above, the method in which the resolution of some or entirety of the acquired image surface is divided into multiple resolutions to thereby realize substantial matching hierarchization is effective in both recognition speed and recognition accuracy in comparison with the case in which a plurality of matching servers are simply distributed in a clustered manner.

Especially, the above-described method is a method effective in the case that the number of images preliminarily registered into a database is very large (1000 or larger), and is effective in the case that images with high similarity are included therein.

[Seventh Embodiment]

Next, a retrieval system according to a seventh embodiment of the present invention is described.

The present embodiment is characterized by the printout cutting-out process in the above-described step S12. In the other respects, the seventh embodiment is the same as the first embodiment and a description of the same parts is omitted here. This embodiment adopts a method of extracting a closed region by line segment extraction.

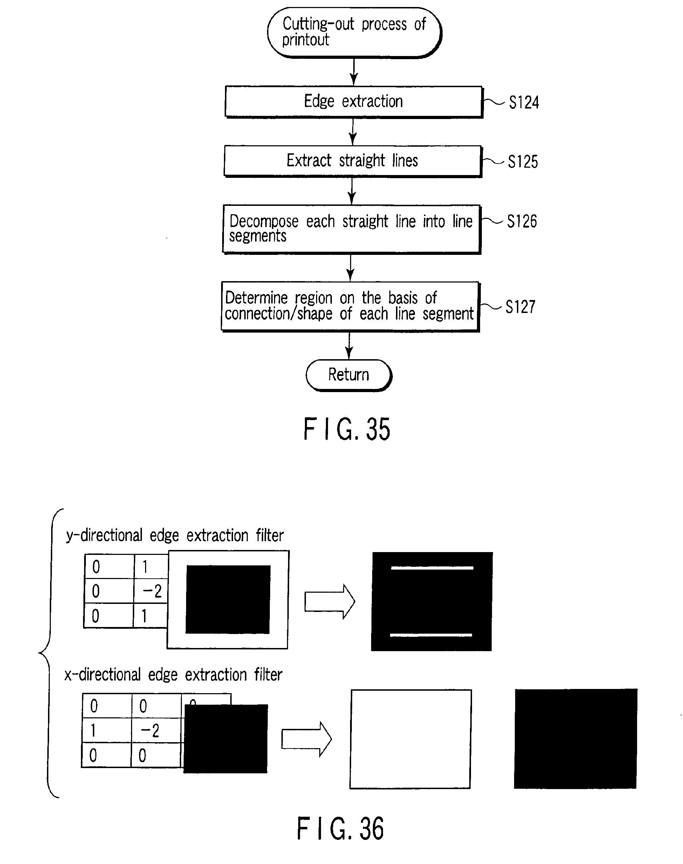

Specifically, as shown in FIG. 35, in the printout cutting-out process in this embodiment, edge components are first extracted from image data including an image of the retrieval source printout 1, which is acquired by the digital camera 10, thereby to facilitate detection of a line segment (step S124). The edge components are extracted from the image data by using a filter disclosed, for example, in Ozaki et al. "Image Processing" ("Gazou Shori") published by Kyoritsu Shuppan Kabushiki-Kaisha, and Tezuka et al., "Digital Image Processing Engineering" ("Dejitaru Gazou Shori Kougaku") published by Nikkan Kogyo Shinbun-sha. In this case, ordinary filters, as shown in FIG. 36, are used in accordance with directions of edges to be detected. In this example, edge component extraction in two directions x and y is described. However, when the direction of the retrieval source printout 1, which is the object of detection, is not specified, edge component extraction is executed in all directions.

Next, straight line components are extracted (step S125). For example, a straight line component is extracted by Hough transform.

As disclosed, for example, in Ozaki et al. "Image Processing" ("Gazou Shori") published by Kyoritsu Shuppan Kabushiki-Kaisha, and Tezuka et al., "Digital Image Processing Engineering" ("Dejitaru Gazou Shori Kougaku") published by Nikkan Kogyo Shinbun-sha, the Hough transform is a method of determining a straight line from a set of points by coordinate transform, and this method is widely used in image processing.

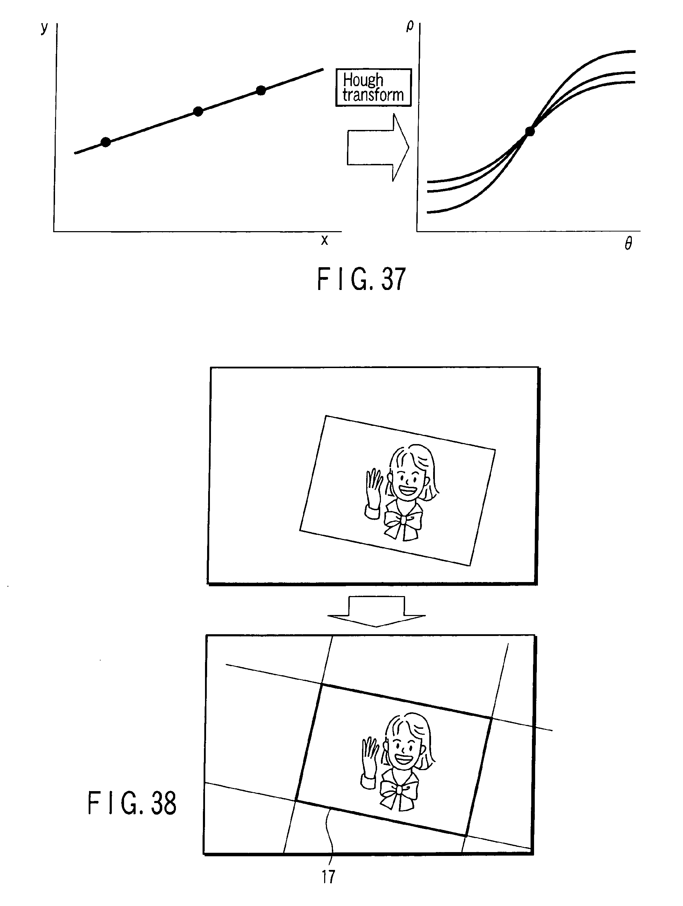

In the Hough transform, as shown in FIG. 37, coordinates (x, y) on an image are transformed to a Hough curve which is represented by $\theta$ and $\rho$.

$$\rho = x\cos\theta + y\sin\theta \qquad \ldots(1)$$

In the image from which edges are extracted by the edge extraction filters, the coordinates (x, y) of a pixel with a value exceeding a threshold are transformed to a Hough curve, and a curve is drawn on a $\theta$ - $\rho$ image on coordinate axes $\theta$ and $\rho$. Actually, the coordinates ($\theta$, $\rho$) of the $\theta$ - $\rho$ image are counted up.

Since an intersection of Hough curves represents the same straight line, the luminance (overlap at the intersection) of the obtained ($\theta$, $\rho$) coordinates represents the number of pixels on the same straight line. The coordinates ($\theta$, $\rho$) with the highest luminance on the $\theta$ - $\rho$ image are substituted in the above formula (1), and a formula of a straight line is obtained.

Next, each straight line obtained by the Hough transform is decomposed into line segments (step S126). Specifically, line segments, which are formed by extending the respective straight lines, are found. A region is determined on the basis of, for example, the connection or shape of each line segment (step S127). To be more specific, a region surrounded by four line segments is found. If a closed region is found, this region is treated as an extraction region. The reason is as follows. In the case where there is only one retrieval source printout 1 (region of interest) in the image acquisition view field, it should suffice if a region surrounded by four straight lines is sought. However, in the case where there are a plurality of retrieval-source printouts 1 and these printouts 1 partially overlap, a retrieval source printout 1 which is located on a background side is not surrounded by four straight lines. By seeking a region on the basis of line segments which are formed by extending the straight lines, a closed region of the retrieval source printout 1, which is located on the background side, can be estimated.

Various methods have been proposed for recognition of a closed region, although such methods are not described here. The extraction of straight lines using the edge extraction and Hough transform has been described. However, the method of extracting straight lines is not limited to this example, and any method of detecting straight lines can be adopted.

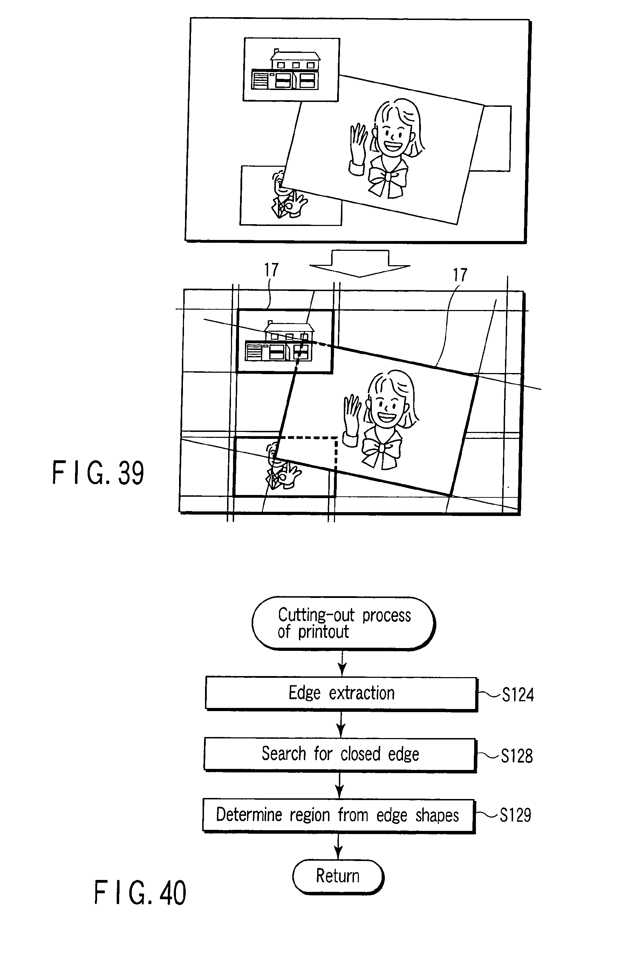

FIG. 38 and FIG. 39 show examples of the extraction of straight lines by the above-described process. Thick lines 17 indicate straight lines extracted. FIG. 38 shows a case where only one region of interest is present in the image acquisition view field, and FIG. 39 shows a case where a plurality of regions-of-interest are present in the image acquisition view field.

In the case where a plurality of regions-of-interest are present, it may be possible to retrieve a plurality of original image data. However, if the regions-of-interest are narrowed down to one region of interest, the region of interest may be selected as follows.

For example, a closed region located at a central part of the subject image is preferentially selected.

Alternatively, a plurality of closed regions, which are found, are displayed on the display unit 15 of the digital camera 10, and the user may select a desired closed region by operating four direction arrow keys or the like. In this case, partial correction of the region by the user may be permitted through such a user interface.

A closed region with a large area may preferentially be selected.

Alternatively, an image including a predetermined color (e.g. red, blue) in extracted regions may be selected.

Moreover, an extracted region with a frequency distribution close to a predetermined value may be selected.

A closed region with less overlap with other regions, that is, a closed region located on a foreground side, may preferentially be selected. The following methods for recognizing a state with less overlap are available.

Method 1: The points in the right part of FIG. 37, which are recognized as being present on the same line by Hough transform, are positioned once again on the line in the left part of FIG. 37. Thereby, the line segments on the line are determined and the foreground/background relationship of the region can be found from the relationship between each line segment and the extracted region shown in FIG. 39. A region, which is located on a more foreground side, is determined to be a region with less overlap.

Method 2: In the retrieval system, in the case where there are a plurality of templates to be subjected to matching, if a certain template has an extremely low similarity, it can be determined that this part is shut off by other regions.

Aside from the above methods, it is possible to combine methods 1 and 2 in order to more precisely determine a state with less overlap.

As has been described above, the present embodiment adopts a method of finding an intersection of line segments which is based on an extracted straight line. Thus, it should suffice if a part of each side of the retrieval source printout 1 is visible.

Therefore, a target retrieval source printout 1 can easily be extracted from a plurality of retrieval-source printouts 1. In particular, even in a case where retrieval-source printouts 1 partially overlap, the extraction is enabled.

[Eighth Embodiment]

Next, a retrieval system according to an eighth embodiment of the present invention is described.

The present embodiment is characterized by the printout cutting-out process in the above-described step S12. In the other respects, the eighth embodiment is the same as the first embodiment and a description of the same parts is omitted here. This embodiment adopts a method of extracting a closed region by edge extraction.

FIG. 40 is a flowchart illustrating the operation of the printout cutting-out process in the present embodiment.

Specifically, edges are extracted by using filters from image data including an image of the retrieval source printout 1, which is acquired by the digital camera 10 (step S124). The detected edges are searched (step S128), and a region is determined from the shapes of the edges (step S129).

By this method, too, the closed region can be extracted.

[Ninth Embodiment]

Next, a retrieval system according to a ninth embodiment of the present invention is described.

The present embodiment is characterized by the printout cutting-out process in the above-described step S12. In the other respects, the ninth embodiment is the same as the first embodiment and a description of the same parts is omitted here. This embodiment adopts a method of extracting a closed region by dividing an image and restricting line segments to be extracted.

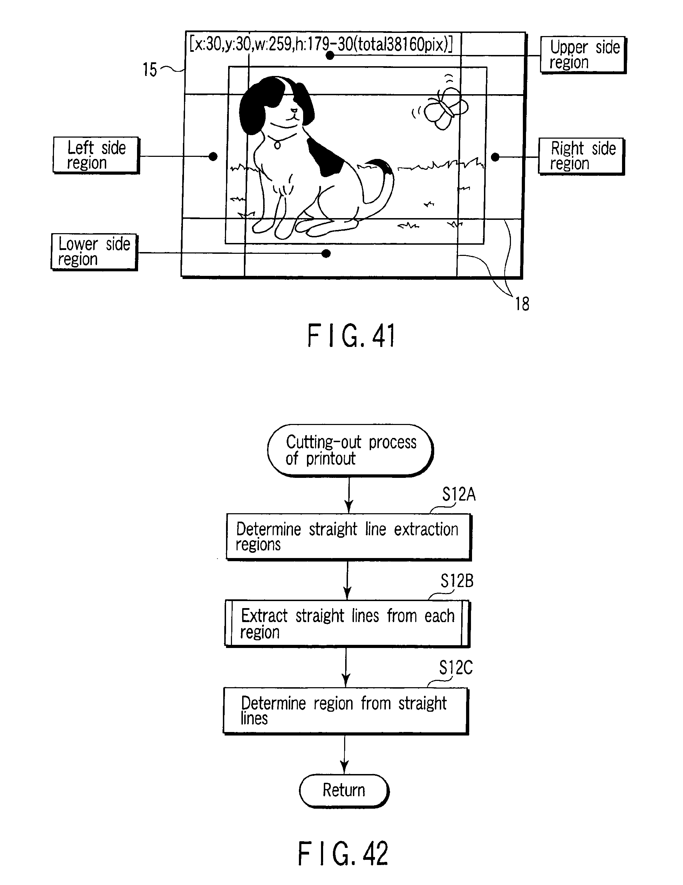

Specifically, in the present embodiment, when the image of the retrieval source printout 1 is acquired by the digital camera 10 in the retrieval mode, a guide frame 18 is displayed on the display unit 15, as shown in FIG. 41. The user is made to perform image acquisition such that the four sides of the retrieval source printout 1 are included, respectively, in the upper side region, lower side region, left side region and right side region, which are divided by the guide frame 18. The width of each region can be set in the setting mode of the digital camera 10 by the operation of, e.g. the four direction arrow keys to such a width as to facilitate image acquisition by the user.

Thereby, the acquired image data can similarly be divided into four regions of upper, right, left and lower sides. In the straight line extraction as described in connection with the sixth embodiment, only horizontal lines are detected with respect to the upper side region and lower side region and only vertical lines are detected with respect to the right side region and left side region. By restricting the extraction of lines, the amount of calculations can greatly be reduced.

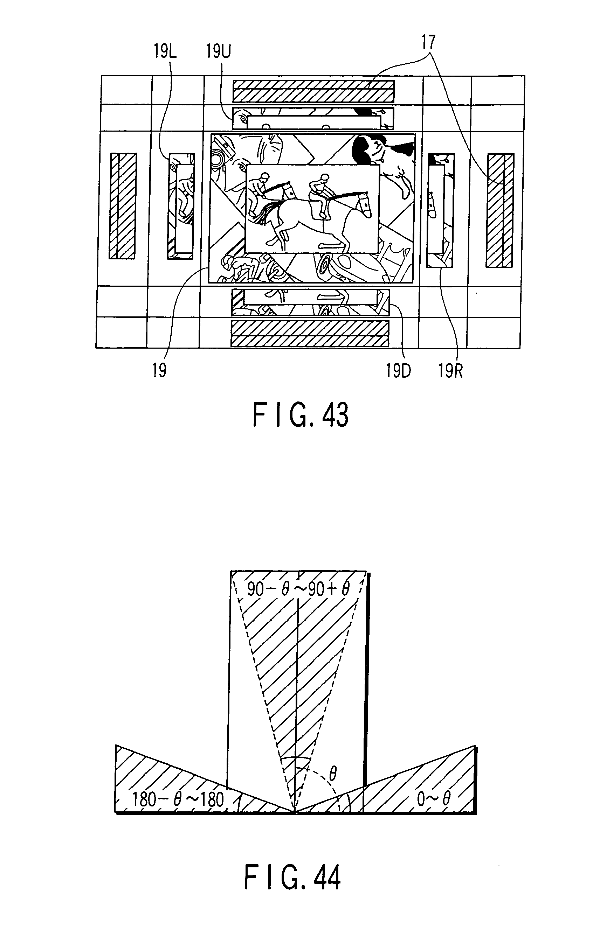

FIG. 42 is a flowchart illustrating the operation of the printout cutting-out process in the present embodiment. Specifically, in this embodiment, to begin with, straight line extraction regions in the image data including the image of the retrieval source printout 1, which is acquired by the digital camera 10, are determined on the basis of the current setting of the guide frame 18 (step S12A). To be more specific, as shown in FIG. 43, four straight line extraction regions, that is, upper, lower, left and right straight line extraction regions, are determined. Straight lines are extracted from image data 19U, 19D, 19L and 19R of the respective determined straight line extraction regions (step S12B).

In the sixth embodiment, all straight lines in the image data are subjected to Hough transform, and pixels that are points on the straight lines are counted. In the present embodiment, as shown in FIG. 44, the range of angles, in which the sides of the straight line extraction regions are present, are determined.

The range of search is determined in accordance with the process region size in the following manner.

Diagonal angle $\theta = \pm$ atan (height of process region/width of process region)

Vertical line search range: $90 - \theta \sim 90 + \theta$

Horizontal line search range: $0 \sim \theta, 180 - \theta \sim 180$

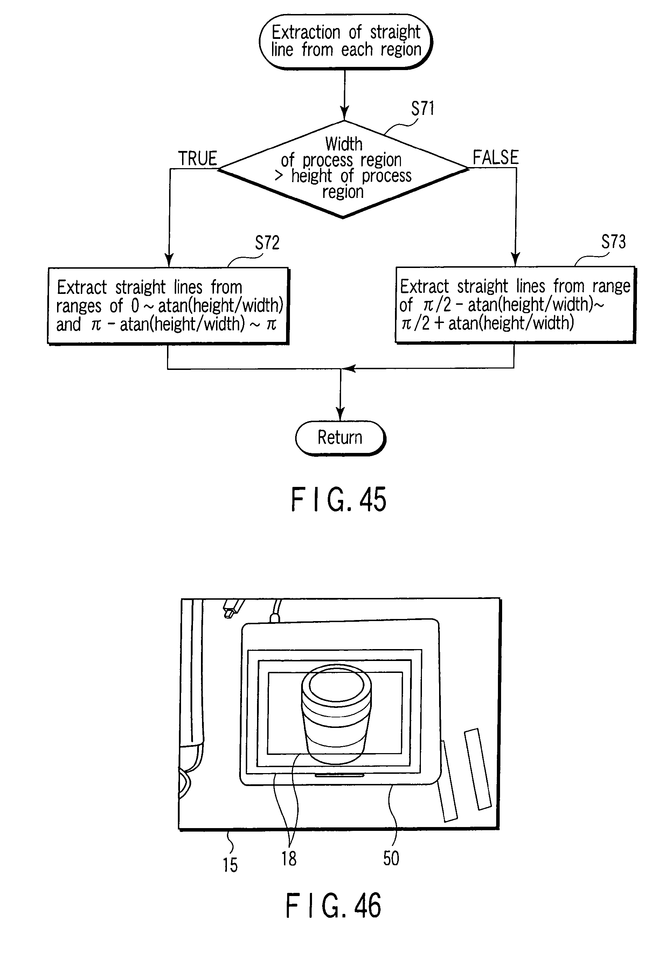

As illustrated in the operational flowchart of FIG. 45, the width and height of the process region are compared (step S71). If the width is greater, straight lines are extracted from the ranges of $0 \sim$ atan (height of process region/width of process region) and $\pi -$ atan (height of process region/width of process region) $\sim \pi$ (step S72). If the height of the process region is greater than the width of the process region, straight lines are extracted from the range of $\pi/2 -$ atan (width of process region/height of process region) $\sim \pi/2 +$ atan (width of process region/height of process region) (step S73).

In this manner, by restricting the search ranges, the closed region is determined by the procedure as described in connection with the sixth embodiment (step S12C). The determined closed regions are presented as thick lines 17 on the display unit 15 of the digital camera 10.

In the case where the extracted region is not a desired region due to influence of, e.g. noise in the image data (e.g. in the case where the ground or horizon is detected), correction can be made by the following method.

(a) A straight line with a second highest luminance in $\theta$ - $\rho$ coordinates in the above-described Hough transform is used.
(b) A straight line, which is manually selected and extracted by the user, is used.

Needless to say, the extracted closed region may partially be corrected by the user, as in the sixth embodiment.

As has been described above, according to the eighth embodiment, the image acquisition screen is divided and the sides of the retrieval source printout 1 are made to fall within the respective regions. Thereby, the detection ranges are restricted, and the calculation amount is reduced and calculation speed is increased.

The input image is not limited to a still image. When motion video is input, the motion video is processed on a frame-by-frame basis, and each extracted region can be displayed. Information of a plurality of frames can be evaluated together and, for example, regardless of the luminance value of the $\theta \cdot \rho$ coordinates in the Hough transform, a straight line which is extracted in any of the frames or a straight line with high occurrence in predetermined plural frames can be obtained as a candidate.

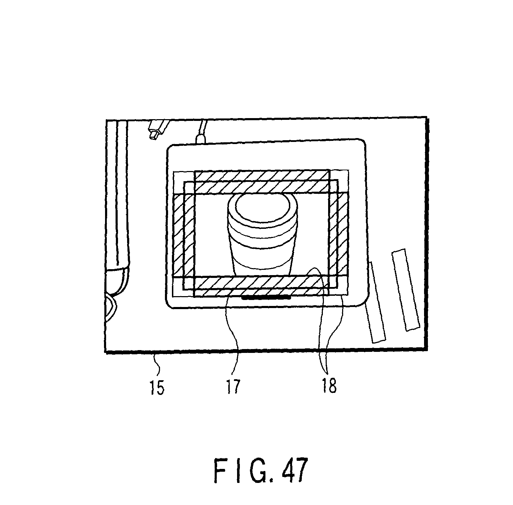

Moreover, the input image is not limited to the retrieval source printout 1 which is printed out by the printer. As shown in FIG. 46, a display device 60, which displays image data, may be acquired, and the image data displayed on the display device 60 may be extracted as a region of interest and thick lines 17 may be displayed as shown in FIG. 47. In this case, as shown in FIG. 43, the image data 19U, 19D, 19L and 19R of the respective straight line extraction regions may be replaced with black image data, thereby to display the thick lines 17 more distinguishably.

The present invention has been described on the basis of the embodiments. However, the invention is not limited to the above-described embodiments and, needless to say, various modifications and applications may be made without departing from the spirit of the invention.

For example, the digital cameras are not limited to digital still cameras for acquiring still images, and may include digital movie cameras which capture motion video.

The image acquisition function-equipped communication devices, which are digital cameras having communication functions, include camera-equipped mobile phones, camera-equipped PHS and stationary TV phones.

Industrial Applicability

The present invention is widely applicable to not only camera-equipped mobile phones and digital cameras, but also systems which generally acquire and store digital images by cameras, such as a security system of the type in which authentication is executed by images.

**Claims**

1. A retrieval system **characterized by** comprising:

   region extraction means (12; 41) for extracting a region which corresponds to a printout image (1), from image data of a subject acquired by an image acquisition means (11), the subject including the printout image;
   feature value extraction means (13; 42) for extracting a feature value of the region extracted by the region extraction means; and
   retrieval means (14; 43) for accessing a database (20), which enables retrieval of image data on the basis of the feature value, and retrieving image data from the database on the basis of the feature value which is extracted by the feature value extraction means.

2. The retrieval system according to claim 1, **characterized in that** the retrieval system is realized as a system which is built in a digital camera (10).

3. The retrieval system according to claim 1, **characterized in that** the retrieval system is realized as a system which is built in a communication apparatus (50) with an image acquisition function.

4. The retrieval system according to claim 1, **characterized by** further comprising the image acquisition means.

5. The retrieval system according to claim 1, **characterized by** further comprising the database.

6. The retrieval system according to claim 1, **characterized in that** the database is provided outside the retrieval system, and the access to the database is executed via communication means.

7. The retrieval system according to claim 5, **characterized in that** the database is constructed by calculating a feature value with respect to original image data of the printout image.

8. The retrieval system according to claim 1, **characterized in that** the feature value is composed of feature points and a lattice-shaped template, and the retrieval means retrieves the image data by executing narrowing-down by using both the feature points and the lattice-shaped template.

9. A retrieval method for retrieving image data on the basis of a printout image (1), **characterized by** comprising:

extracting a region which corresponds to a printout image, from image data of a subject acquired by an image acquisition means (11), the subject including the printout image;
extracting a feature value of the extracted region; and
accessing a database (20), which enables retrieval of image data on the basis of the feature value, and retrieving image data from the database on the basis of the extracted feature value.

10. A retrieval system **characterized by** comprising:

image acquisition means (11) for acquiring an image of a subject;
feature value extraction means (12; 42) for extracting a feature value of a region which is acquired by the image acquisition means;
retrieval means (14; 43) for accessing an image database (20), which enables retrieval of image data on the basis of the feature value, and retrieving image data from the image database on the basis of the feature value which is extracted by the feature value extraction means; and
display means (15; 44) for displaying a plurality of retrieval results of the retrieval means.

11. The retrieval system according to claim 10, **characterized in that** the image acquisition means acquires an image of an object, as the subject, a position of the object being uniquely determined on the basis of the feature value, and the retrieval means recognizes a position of a photographer on the basis of image data which is acquired by the image acquisition means, accesses a relevant information database (20) which stores relevant information in connection with the position, and retrieves relevant information from the relevant information database on the basis of the recognized position.

12. The retrieval system according to claim 11, **characterized in that** the display means displays the image data and the relevant information, which are retrieved by the retrieval means, by overlaying the image data and the relevant information on a corresponding position on a map.

13. The retrieval system according to claim 12, **characterized in that** when the display means displays the retrieved image data and relevant information by overlaying the image data and relevant information on the corresponding position on the map, the display means displays the image data and relevant information in accordance with a predetermined scale.

FIG.1

FIG. 2

FIG. 3

Cutting-out process
of printout

Extract line segments — S121

Detect straight lines — S122

Estimate frame — S123

Return

# FIG. 4

Matching process with
DB

Calculate similarity — S141

Sort in accordance with
similarity — S142

Select original image
candidates — S143

Return

# FIG. 5

Matching process with
DB

Matching process with feature point DB — S144

Extract detail retrieval candidate objects — S145

Matching process between detail feature
of acquired image of object of interest
and detail template DB — S146

Select original image candidates — S147

Return

# FIG. 6

15

151

Previous

Next
152

153

Determine

Determine candidate image ?

# FIG. 7

151 154 15

Determine candidate
image ?

Previous 152    153    152    Next

Determine

F I G. 8

| Acquire image | ~ S201 |

↓

| Store acquired image | ~ S202 |

↓

| Create template data | ~ S203 |

↓

| Store template data | ~ S204 |

F I G. 9

Select print image ~ S211

Set print condition ~ S212

S213

Perform printout | Reflection of condition

Create template dara ~ S214

Store template data ~ S215

# FIG. 10

Batch-template creation execution instruction ~ S221

Select feature uncreated original image ~ S222

Batch-template creation process ~ S223

Create template data ~ S223A

Store template data ~ S223B

# FIG. 11

Select image ~ S231

Instruct template creation ~ S232

Create template data ~ S233

Store template data ~ S234

# FIG. 12

極楽寺駅
GOKURAKUJI STA

(1)

10

(2)

20

(3)

Storage

F I G. 13

15

## FIG. 14

15

## FIG. 15

FIG. 16

FIG. 17

```
         10
          |
   ┌──────────────────┐   ┌──────────────────────────────────────────────┐
   │  ┌─────────────┐ │   │              41                           ~40 │
11~┤  │Image        │ │   │           ┌───────────────┐                   │
   │  │acquisition  │ │   │           │Region         │                   │
   │  │unit         │ │   │  ──────►  │extraction unit│                   │
   │  └─────────────┘ │   │           └───────────────┘                   │
   │        │         │   │                   │      42                   │
   │        ▼         │   │                   ▼   ┌───────────────┐       │
16~┤  ┌─────────────┐ │   │           │Feature value  │               │
   │  │Storage unit │─┼───┘           │extraction unit│               │
   │  └─────────────┘ │               └───────────────┘               │
   └──────────────────┘                       │                       │
   ┌────────────────────────────────────────────────────────────────────┐
   │    44                          43   │                               │
   │ ┌─────────────┐         ┌──────────────┐    ┌──────────────┐        │
   │ │Display unit │ ◄────── │Matching unit │◄──►│Communication │◄──►    │
   │ └─────────────┘         └──────────────┘    │unit          │        │
   └──────────────────────────────│──────────────└──────────────┘────────┘
                                   ▼
                          ┌──────────────┐
                          │   Printer    │ ~30
                          └──────────────┘
```

                    ┌──────────────────┐
                 20 │                  │
                    │ (Original image) │
                    │                  │
                    └──────────────────┘

# F I G. 18

Camara side

PC side

Start

S11 — Acquire image of printout

Transmit acquired image data

Cutting-out process of printout — S12

Extract feature value — S13

Matching process with DB — S14

S31 — Display extracted image candidates

Option

Display extracted image candidates — S15

Select and output extracted image candidates — S18

End

FIG. 19

EP 1 783 681 A1

Acquire image of printout

Acquire image of printout ⊢∿ S111

Transfer acquired printout image data ⊢∿ S112

Return

F I G. 20

Start data transfer ⊢∿ S241

Store data into storage of PC, etc. ⊢∿ S242

Create template data ⊢∿ S243

Store template data ⊢∿ S244

F I G. 21

50

51                                52                            53

| Camera | → | Application software | → | Display |

F I G. 22

Camera side | Server side

Start

S11 — Acquire image of printout
(Acquire image of object of interest)

S12 — Cutting-out process of printout
(Extraction of region of interest)

S13 — Extract feature value

Transfer of feature
value data

S14
Matching process with DB

20
Image data and
feature value data
and relevant
information

Image transmission
after compression

S41
Extract plural similar image
candidates

S42 — Simple display of extracted similar
image candidates

S43 — Selection and outputting of
extracted image candidates or
selection of output of relevant
information

End

F I G. 23

EP 1 783 681 A1

F I G. 24

F I G. 25

F I G. 26

```
                    ┌──────────────┐
                    │    Start     │
                    └──────┬───────┘
                           │
                           ▼
        ╔═════════════════════════════════════════╗
        ║  Acquire image of printout              ║
        ║  (Acquire image of object of interest)  ║──S11
        ╚═════════════════════════════════════════╝
                           │
                           ▼
        ╔═════════════════════════════════════════╗
        ║  Cutting-out process of printout        ║
        ║  (Extraction of region of interest)     ║──S12
        ╚═════════════════════════════════════════╝
                           │
                           ▼
        ┌─────────────────────────────────────────┐
        │  Extract total feature value of printout│──S51
        └─────────────────────────────────────────┘
                           │
                           ▼
        ╔═════════════════════════════════════════╗
        ║  Matching process with total feature    ║
        ║  value DB                               ║──S52
        ╚═════════════════════════════════════════╝
                           │
                           ▼
        ┌─────────────────────────────────────────┐
        │  Extract detail retrieval object        │──S53
        └─────────────────────────────────────────┘
                           │
                           ▼
        ┌─────────────────────────────────────────┐
        │  Extract detail feature value of printout│──S54
        └─────────────────────────────────────────┘
                           │
                           ▼
        ╔═════════════════════════════════════════╗
        ║  Matching process with detail feature   ║
        ║  value DB                               ║──S55
        ╚═════════════════════════════════════════╝
                           │
                           ▼◄───────────────────────┐
        ┌─────────────────────────────────────────┐│
        │  Display extracted image candidates     │──S15
        └─────────────────────────────────────────┘│
                           │                        │
                           ▼          ╱S17          │
                     ╱───────────────╲    NO        │
                    ╱   Determined    ╲─────────────┘
                    ╲       ?         ╱
                     ╲───────────────╱
                           │ YES
                           ▼
        ┌─────────────────────────────────────────┐
        │              Print                      │──S18
        └─────────────────────────────────────────┘
                           │
                           ▼
                    ┌──────────────┐
                    │     End      │
                    └──────────────┘
```

F I G. 27

F I G. 28

F I G. 29

Image A

Image B

FIG. 30

21

22

23

FIG. 31

16 × 16

21

22

23

128 × 128

F I G. 32

F I G. 33

EP 1 783 681 A1

Camera side

DB and server side

Start

Acquire image of object marker
(Acquire image of object of interest) ~S61

Extract feature value
(Region of interest and feature value) ~S13

Transmission of feature
value data

Matching process with DB  S14

n-th feature value
matching server and
n-th information DB  2n

First feature value
matching server and
first information DB  21

Second feature value
matching server and
second information DB  22

Acquire result-correlated
operation information
(link to URL, etc.)  ~S62

Information related to
matching result

Acquire and display 3D object
(Execution of specified operation)  S63

End

FIG. 34

```
        ┌─────────────────────────┐
        │ Cutting-out process of   │
        │ printout                 │
        └─────────────────────────┘
                    │
                    ▼
  ┌──────────────────────────────────┐
  │      Edge extraction             │──── S124
  └──────────────────────────────────┘
                    │
                    ▼
  ┌──────────────────────────────────┐
  │      Extract straight lines      │──── S125
  └──────────────────────────────────┘
                    │
                    ▼
  ┌──────────────────────────────────┐
  │ Decompose each straight line into line │──── S126
  │ segments                         │
  └──────────────────────────────────┘
                    │
                    ▼
  ┌──────────────────────────────────┐
  │ Determine region on the basis of │
  │ connection/shape of each line segment │──── S127
  └──────────────────────────────────┘
                    │
                    ▼
            ┌──────────────┐
            │    Return    │
            └──────────────┘
```

F I G. 35

y-directional edge extraction filter

| 0 | 1  |
|---|----|
| 0 | -2 |
| 0 | 1  |

x-directional edge extraction filter

| 0 | 0  | 0 |
|---|----|---|
| 1 | -2 |   |
| 0 | 0  |   |

F I G. 36

F I G. 37

F I G. 38

FIG. 39

FIG. 40

[x:30,y:30,w:259,h:179-30(total38160pix)]

Upper side region

15

Left side region

Right side region

Lower side region

18

# FIG. 41

Cutting-out process of printout

Determine straight line extraction regions — S12A

Extract straight lines from each region — S12B

Determine region from straight lines — S12C

Return

# FIG. 42

FIG. 43

FIG. 44

Extraction of straight
line from each region

S71

Width
of process region
> height of process
region

TRUE

FALSE

S72

Extract straight lines from
ranges of 0 ~ atan(height/width)
and $\pi$ – atan(height/width) ~ $\pi$

S73

Extract straight lines from range
of $\pi/2$ – atan(height/width)~
$\pi/2$ + atan(height/width)

Return

F I G. 45

15      18      50

F I G. 46

FIG. 47

<table>
<tr><td colspan="2"><b>INTERNATIONAL SEARCH REPORT</b></td><td>International application No.<br>PCT/JP2006/313013</td></tr>
</table>

A. CLASSIFICATION OF SUBJECT MATTER
*G06T1/00*(2006.01)i, *G06F17/30*(2006.01)i, *G06T7/00*(2006.01)i, *H04N5/225*
(2006.01)i, *H04N5/76*(2006.01)i, *H04N5/91*(2006.01)i

According to International Patent Classification (IPC) or to both national classification and IPC

B. FIELDS SEARCHED

Minimum documentation searched (classification system followed by classification symbols)
G06T1/00, G06F17/30, G06T7/00, H04N5/225, H04N5/76, H04N5/91

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-20409 A  (Casio Computer Co., Ltd.),<br>20 January, 2005 (20.01.05),<br>Full text; all drawings<br>(Family: none) | 1-13 |
| Y | JP 2003-296343 A  (Fuji Photo Film Co., Ltd.),<br>17 October, 2003 (17.10.03),<br>Full text; all drawings<br>& US 2003-0164965 A1 | 1-13 |
| Y | JP 2005-4724 A  (Canon Inc.),<br>06 January, 2005 (06.01.05),<br>Full text; all drawings<br>& US 2004-0234169 A1    & EP 001480440 A2 | 1-13 |

| ☒ Further documents are listed in the continuation of Box C. | ☐ See patent family annex. |
|---|---|

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>20 September, 2006 (20.09.06) | Date of mailing of the international search report<br>03 October, 2006 (03.10.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/313013

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-187731 A  (Ricoh Co., Ltd.),<br>04 July, 2000 (04.07.00),<br>Full text; all drawings<br>& US 006711287 B1 | 1-13 |
| Y | JP 2000-276474 A  (Fuji Photo Film Co., Ltd.),<br>06 October, 2000 (06.10.00),<br>Full text; all drawings<br>& US 006513035 B1       & CN 001268710 A<br>& TW 000469383 B | 10-13 |
| Y | JP 2002-91990 A  (Sony Corp.),<br>29 March, 2002 (29.03.02),<br>Full text; all drawings<br>& US 2002-0048054 A1    & EP 001172741 A2 | 10-13 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001088374 A

**Non-patent literature cited in the description**

- **OZAKI et al.** Image Processing. Kyoritsu Shuppan Kabushiki-Kaisha
- **TEZUKA et al.** Digital Image Processing Engineering. Nikkan Kogyo Shinbun-sha